# EUROPEAN PATENT APPLICATION

(11) **EP 4 648 529 A1**
(43) Date of publication of application: **12.11.2025**
(21) Application number: 24756036.0
(22) Date of filing: 02.02.2024
(51) Int. Cl.: H04W 74/00

(54) **RANDOM ACCESS RESOURCE SELECTION METHOD AND COMMUNICATION APPARATUS**

(30) Priority: 16.02.2023 CN 202310165219; 12.05.2023 CN 202310544153; 10.08.2023 CN 202311010441
(71) Applicant: Huawei Technologies Co., Ltd., Shenzhen, Guangdong 518129 (CN)
(72) Inventor: LI, Chenwan, Shenzhen, Guangdong 518129 (CN); SHI, Yulong, Shenzhen, Guangdong 518129 (CN); LI, Jiaojiao, Shenzhen, Guangdong 518129 (CN); FANG, Songlei, Shenzhen, Guangdong 518129 (CN)
(74) Representative: Grünecker Patent- und Rechtsanwälte PartG mbB
(86) International application number: PCT/CN2024/075545
(87) International publication number: WO 2024/169662

(57) **Abstract**

This application provides a random access resource selection method and a communication apparatus, to select a random access resource for an enhanced reduced capability terminal, and may be applied to a communication system. The method includes: A terminal device determines a first random access resource, and sends a message 1 to a network device on the first random access resource. The terminal device is an enhanced reduced capability first-type terminal, and the first random access resource includes a random access resource of a second-type terminal or a random access resource of a third-type terminal. The second-type terminal is a reduced capability terminal, the third-type terminal is a non-reduced capability terminal, the random access resource of the second-type terminal is used by the second-type terminal for random access to the network device, the random access resource of the third-type terminal is used by the third-type terminal for random access to the network device, and the message 1 is used by the terminal device for random access to the network device.

## Description

This application claims priority to Chinese Patent Application No. 202310165219.6, filed with the China National Intellectual Property Administration on February 16, 2023 and entitled "RANDOM ACCESS RESOURCE SELECTION METHOD AND COMMUNICATION APPARATUS", which is incorporated herein by reference in its entirety.

This application claims priority to Chinese Patent Application No. 202310544153.1, filed with the China National Intellectual Property Administration on May 12, 2023 and entitled "RANDOM ACCESS RESOURCE SELECTION METHOD AND COMMUNICATION APPARATUS", which is incorporated herein by reference in its entirety.

This application claims priority to Chinese Patent Application No. 202311010441.5, filed with the China National Intellectual Property Administration on August 10, 2023 and entitled "RANDOM ACCESS RESOURCE SELECTION METHOD AND COMMUNICATION APPARATUS", which is incorporated herein by reference in its entirety.

### TECHNICAL FIELD

This application relates to the communication field, and in particular, to a random access resource selection method and a communication apparatus.

### BACKGROUND

In a wireless communication protocol, a reduced capability terminal and a non-reduced capability terminal (which may also be referred to as a legacy terminal) are defined. The reduced capability terminal may send a message 1 on a random access resource configured for the reduced capability terminal, for example, a reduced capability specific message 1 (reduced capability specific message1, RedCap Msg1) resource defined in the protocol release 17 (release 17, R17), to perform random access, and the non-reduced capability terminal may perform random access on a random access resource of the non-reduced capability terminal. In the protocol release 18 (release 18, R18), an enhanced reduced capability terminal is proposed. However, the R18 does not define a resource for sending the message 1. How to select the resource for sending the message 1 to implement random access of the enhanced reduced capability terminal is an urgent problem to be resolved.

### SUMMARY

Embodiments of this application provide a random access resource selection method and a communication apparatus, to implement random access of an enhanced reduced capability terminal.

To achieve the foregoing objective, this application uses the following technical solutions.

According to a first aspect, a random access resource selection method is provided. The random access resource selection method includes: A terminal device determines a first random access resource. The terminal device is an enhanced reduced capability first-type terminal, and the first random access resource includes a random access resource of a second-type terminal or a random access resource of a third-type terminal. The second-type terminal is a reduced capability terminal, the third-type terminal is a non-reduced capability terminal, the random access resource of the second-type terminal is used by the second-type terminal for random access to a network device, and the random access resource of the third-type terminal is used by the third-type terminal for random access to the network device. The terminal device sends a message 1 to the network device on the first random access resource. The message 1 is used by the terminal device for random access to the network device.

According to the access control method provided in the first aspect, the terminal device may determine the first random access resource, where the terminal device is the enhanced reduced capability first-type terminal, the first random access resource is the random access resource of the second-type terminal or the random access resource of the third-type terminal, and the terminal device sends the message 1 on the first random access resource. The message 1 is used by the terminal device for random access to the network device. In this way, when no random access resource of the first-type terminal is configured, the random access resource of the second-type terminal or the random access resource of the third-type terminal may be used to send the message 1, to implement random access of the first-type terminal.

In a possible design solution, determining the first random access resource by the terminal device may include: When no random access resource of the first-type terminal is configured for the terminal device, the terminal device determines the first random access resource. The random access resource of the first-type terminal is used by the first-type terminal to access the network device.

In a possible design solution, determining the first random access resource by the terminal device may include: When the random access resource of the second-type terminal is configured for the terminal device, the terminal device determines the random access resource of the second-type terminal as the first random access resource. In this way, when the random access resource of the second-type terminal and the random access resource of the third-type terminal are configured for the terminal device, the message 1 is sent by using the random access resource of the second-type terminal, reducing overheads.

In a possible design solution, the random access resource is a random access resource for transmitting the message 1, and determining the first random access resource by the terminal device may include: When no random access resource used by the first-type terminal to transmit the message 1 is configured, the terminal device determines a random access resource used by the second-type terminal to transmit the message 1 as the first random access resource.

When the random access resource of the second-type terminal and the random access resource of the third-type terminal are configured for the terminal device, a priority of the random access resource of the second-type terminal may be higher than a priority of the random access resource of the third-type terminal.

For example, the random access resource of the second-type terminal and the random access resource of the third-type terminal may be included in a same bandwidth part BWP.

Optionally, the method provided in the first aspect may further include: The terminal device receives a system message 1 from the network device. The system message 1 indicates the first random access resource.

For example, the random access resource of the second-type terminal and the random access resource of the third-type terminal may be included in different BWPs.

In a possible design solution, the random access resource of the third-type terminal may be configured for the terminal device. Determining the first random access resource by the terminal device may include: When no random access resource of the first-type terminal and no random access resource of the second-type terminal are configured for the terminal device, the terminal device determines the random access resource of the third-type terminal as the first random access resource. In this way, when no random access resource of the second-type terminal is configured, the third-type random access resource may be used to implement random access, to successfully complete random access and implement uplink synchronization.

In a possible design solution, the method provided in the first aspect may further include: The terminal device receives a message 2 from the network device. The message 2 indicates a timing advance for sending information by the terminal device to the network device, a delay of sending a message 3 by the terminal device, and a bandwidth occupied by the message 3. The bandwidth is occupied by the terminal device for sending the message 3. The delay of sending the message 3 by the terminal device is greater than a delay of sending the message 3 by the second-type terminal and a delay of sending the message 3 by the third-type terminal, and the bandwidth occupied by the terminal device for sending the message 3 is less than a bandwidth occupied by the second-type terminal for sending the message 3 and a bandwidth occupied by the second-type terminal for sending the message 3.

Optionally, the method provided in the first aspect may further include: The terminal device sends the message 3 based on the message 2. The message 3 further indicates that the terminal device is the first-type terminal. In this way, the terminal device indicates, in the message 3, that the terminal device is the first-type terminal, so that the network device can obtain a type of the terminal device in time, and the network device performs resource scheduling based on the type of the terminal device.

In a possible design solution, the method provided in the first aspect may further include: The terminal device receives second indication information from the network device. The second indication information indicates that the first-type terminal is allowed to access the network device. In this way, the terminal device may perform the random access procedure after receiving the second indication information, implementing management of different types of terminals by the network device.

In a possible design solution, before the terminal device determines the first random access resource, the method provided in the first aspect may further include: The terminal device receives third indication information from the network device. The third indication information indicates one or more of the following: a quantity of receive antennas of a first-type terminal that is barred from accessing the network device, or a duplex mode supported by the network device. The terminal device determines, based on the third indication information and capability information of the terminal device, to camp on a cell corresponding to the network device. In this way, before performing the random access procedure, the terminal device may select to camp on a cell that corresponds to the network device and that matches the capability information of the terminal device, improving communication efficiency.

Optionally, determining, by the terminal device based on the third indication information and the capability information of the terminal device, to camp on the cell corresponding to the network device may include: When the capability information of the terminal device includes a quantity of receive antennas of the terminal device, if the quantity of receive antennas of the terminal device does not match the quantity of receive antennas indicated by the third indication information, the terminal device camps on the cell corresponding to the network device, and/or the capability information of the terminal device includes a duplex mode of the terminal device, and when the duplex mode of the terminal device is a duplex mode supported by the network device, the terminal device camps on the cell corresponding to the network device.

Optionally, the quantity of receive antennas indicated by the third indication information includes one receive antenna and/or two receive antennas, and the duplex mode indicated by the third indication information includes half-duplex frequency division duplex.

Optionally, the third indication information includes first sub indication information. The first sub indication information indicates a quantity of receive antennas of a first-type terminal that is barred from accessing the network device, and the first sub indication information further indicates a quantity of receive antennas of a second-type terminal that is barred from accessing the network device. In this way, the first sub indication information may be reused to indicate the quantity of receive antennas used by the first-type terminal to access the network device, reducing overheads. Alternatively, the third indication information may include second sub indication information. The second sub indication information indicates a quantity of receive antennas of a first-type terminal that is barred from accessing the network device.

Optionally, the third indication information includes third sub indication information. The third sub indication information indicates a duplex mode of a first-type terminal supported by the network device, and the third sub indication information further indicates a duplex mode of a second-type terminal supported by the network device. In this way, the first sub indication information may be reused to indicate the quantity of receive antennas used by the first-type terminal to access the network device, reducing overheads.

In a possible design solution, the method provided in the first aspect may further include: The terminal device receives fourth indication information from the network device. The fourth indication information indicates a resource for data transmission between the terminal device and the network device. A bandwidth of the resource for data transmission between the terminal device and the network device is less than or equal to a bandwidth threshold. In this way, a bandwidth of a resource subsequently scheduled by the terminal device can meet a bandwidth limit of the first-type terminal on a resource.

For example, the bandwidth threshold is determined based on the first-type terminal. For example, the bandwidth threshold may be 5 megahertz.

According to a second aspect, a random access resource selection method is provided. The random access resource selection method includes: A network device receives a message 1 from a terminal device on a first random access resource. The first random access resource includes a random access resource of a second-type terminal or a random access resource of a third-type terminal. The terminal device is a reduced capability first-type terminal, the second-type terminal is a reduced capability terminal, the third-type terminal is a non-reduced capability terminal, the random access resource of the second-type terminal is used by the second-type terminal for random access to the network device, and the random access resource of the third-type terminal is used by the third-type terminal for random access to the network device. The message 1 is used by the terminal device for random access to the network device. The network device sends a message 2 to the terminal device based on the message 1, to perform random access. The message 2 indicates a timing advance for sending information by the terminal device to the network device, and the timing advance is determined based on the message 1.

According to the random access resource selection method provided in the second aspect, the network device may receive the message 1 from the terminal device on the first random access resource, and send the message 2 to the terminal device. The first random access resource is the random access resource of the first-type terminal or the random access resource of the second-type terminal. In this way, when no random access resource of the first-type terminal is configured, the message 1 may be received on the random access resource of the second-type terminal or the random access resource of the third-type terminal, to implement random access of the first-type terminal.

In a possible design solution, receiving, by the network device, the message 1 from the terminal device on the first random access resource includes: When no random access resource of the first-type terminal is configured, the network device receives the message 1 from the terminal device on the first random access resource. The random access resource of the first-type terminal is used by the first-type terminal to access the network device. In this way, when the random access resource of the second-type terminal and the random access resource of the third-type terminal are configured for the terminal device, the message 1 may be received by using the random access resource of the second-type terminal.

In a possible design solution, receiving, by the network device, the message 1 from the terminal device on the first random access resource includes: When the random access resource of the second-type terminal is configured, the network device receives the message 1 from the terminal device on the random access resource of the second-type terminal.

In other words, when the random access resource of the second-type terminal and the random access resource of the third-type terminal are configured for the terminal device, a priority of the random access resource of the second-type terminal may be higher than a priority of the random access resource of the third-type terminal.

Optionally, the random access resource of the second-type terminal and the random access resource of the third-type terminal may be included in a same bandwidth part BWP.

In a possible design solution, the method provided in the second aspect may further include: The network device sends a system message 1 to the terminal device, where the system message 1 indicates the first random access resource. In this way, the first random access resource is indicated by using the system message 1, so that the network device can allocate resources more flexibly.

Optionally, the random access resource of the second-type terminal and the random access resource of the third-type terminal may be included in different BWPs.

In a possible design solution, the network device configures the random access resource of the third-type terminal for the terminal device. Receiving, by the network device, the message 1 from the terminal device on the first random access resource includes: When no random access resource of the first-type terminal and no random access resource of the second-type terminal are configured, the network device receives the message 1 from the terminal device on the random access resource of the third-type terminal. In this way, when no random access resource of the second-type terminal is configured, the third-type random access resource may be used to implement random access, to successfully complete random access and implement uplink synchronization.

In a possible design solution, the message 2 may further indicate a timing advance for sending information by the terminal device to the network device, a delay of sending a message 3 by the terminal device, and a bandwidth of a resource occupied by the message 3. The delay of sending the message 3 by the terminal device is greater than a delay of sending the message 3 by the second-type terminal and a delay of sending the message 3 by the third-type terminal. The bandwidth occupied by the terminal device for sending the message 3 is less than a bandwidth occupied by the second-type terminal for sending the message 3 and a bandwidth occupied by the second-type terminal for sending the message 3.

Optionally, the method provided in the second aspect may further include: The network device receives the message 3 from the terminal device, where the message 3 further indicates that the terminal device is the first-type terminal. In this way, the terminal device indicates, in the message 3, that the terminal device is the first-type terminal, so that the network device can obtain a type of the terminal device in time, and the network device performs resource scheduling based on the type of the terminal device.

In a possible design solution, the method provided in the second aspect may further include: The network device sends second indication information to the terminal device. The second indication information indicates that the first-type terminal is allowed to access the network device. In this way, the terminal device may perform the random access procedure after receiving the second indication information, implementing management of different types of terminals by the network device.

In a possible design solution, before the network device receives the message 1 from the terminal device on the first random access resource, the method provided in the second aspect may further include: The network device generates third indication information. The third indication information indicates one or more of the following: a quantity of receive antennas of a first-type terminal that is barred from accessing the network device, or a duplex mode supported by the network device. The network device sends the third indication information to the terminal device. The network device sends the third indication information, so that before performing the random access procedure, the terminal device may select to camp on a cell that corresponds to the network device and that matches capability information of the terminal device, improving communication efficiency.

Optionally, the quantity of receive antennas indicated by the third indication information includes one receive antenna and/or two receive antennas, and the duplex mode indicated by the third indication information includes half-duplex frequency division duplex.

Optionally, the third indication information includes first sub indication information. The first sub indication information indicates a quantity of receive antennas of a first-type terminal that is barred from accessing the network device, and the first sub indication information further indicates a quantity of transmit/receive antennas of a second-type terminal that is barred from accessing the network device. In this way, the first sub indication information may be reused to indicate the quantity of receive antennas used by the first-type terminal to access the network device, reducing overheads. Alternatively, the third indication information includes second sub indication information, and the second sub indication information indicates a quantity of receive antennas of a first-type terminal that is barred from accessing the network device.

Optionally, the third indication information includes third sub indication information. The third sub indication information indicates a duplex mode of a first-type terminal supported by the network device, and the third sub indication information further indicates a duplex mode of a second-type terminal supported by the network device. In this way, the first sub indication information may be reused to indicate the quantity of receive antennas used by the first-type terminal to access the network device, reducing overheads.

In a possible design solution, the method provided in the second aspect may further include: The network device sends fourth indication information to the terminal device. The fourth indication information indicates a resource for data transmission between the terminal device and the network device. A bandwidth of the resource for data transmission between the terminal device and the network device is less than or equal to a bandwidth threshold.

For example, the bandwidth threshold is 5 megahertz.

According to a third aspect, a communication method is provided. The communication method includes: A terminal device determines a second random access resource. The terminal device is an enhanced reduced capability first-type terminal, and the second random access resource includes a first-type random access resource applicable to a second-type terminal and applicable to a first feature set. The second-type terminal is a reduced capability terminal. The first feature set includes one or more of the following features: small data transmission SDT, network slicing, or message 3 retransmission. The terminal device sends a message 1 to the network device on the second random access resource. The message 1 is used by the terminal device for random access to the network device.

According to the communication method provided in the third aspect, the terminal device may select a resource from the random access resource of the reduced capability terminal device, and send the message 1 on the selected resource, to perform random access. In this way, when no random access resource of the first-type terminal is configured, the random access resource of the second-type terminal or the random access resource of the third-type terminal may be used to send the message 1, to implement random access of the first-type terminal.

In a possible design solution, determining the second random access resource by the terminal device may include: When no second-type random access resource applicable to the first-type terminal and applicable to the first feature set is configured for the terminal device, the terminal device determines the second random access resource from the first-type random access resource.

In a possible design solution, the method provided in the third aspect may further include: The terminal device receives first information from the network device. The first information indicates that the first-type random access resource is applicable to the first-type terminal and an SDT procedure triggered by the first-type terminal. In this way, the terminal device can determine the second random access resource based on an indication of the network device, reducing conflicts.

Optionally, the first information may be carried in a feature combination field. In this way, no new field is added, and resource overheads can be reduced.

In a possible design solution, the first-type terminal may include a first-type terminal supporting a first-type capability or a first-type terminal supporting a second-type capability. A maximum transmission rate of the first-type terminal supporting the first-type capability is less than a transmission rate of the second-type terminal, the maximum transmission rate of the first-type terminal supporting the first-type capability is determined based on a first parameter, and a baseband bandwidth of a data transmission channel of the first-type terminal supporting the first-type capability is less than a baseband bandwidth of a data transmission channel of the second-type terminal. A maximum transmission rate of the first-type terminal supporting the second-type capability is less than the transmission rate of the second-type terminal, and the maximum transmission rate of the first-type terminal supporting the first-type capability is determined based on a second parameter. The first parameter includes one or more of the following: a quantity of transport layers, a scaling factor, a modulation order, and a first threshold. The second parameter includes one or more of the following: a quantity of transport layers, a scaling factor, a modulation order, and a second threshold.

Optionally, the method provided in the third aspect may further include: The terminal device receives second information from the network device. The second information indicates that the first-type random access resource is applicable to the first-type terminal supporting the first-type capability and an SDT procedure triggered by the first-type terminal supporting the first-type capability. In this way, a scenario to which the first-type random access resource is applicable may be indicated, so that the first-type random access resource is used more flexibly.

According to a fourth aspect, a communication method is provided. The communication method includes: A network device receives a message 1 from a terminal device on a second random access resource. The terminal device is an enhanced reduced capability first-type terminal, and the second random access resource includes a first-type random access resource applicable to a second-type terminal and applicable to a first feature set. The second-type terminal is a reduced capability terminal. The first feature set includes small data transmission, network slicing, or message 3 retransmission. The message 1 is used by the terminal device for random access to the network device.

In a possible design solution, receiving, by the network device, the message 1 from the terminal device on the second random access resource may include: When no second-type random access resource used for the first-type terminal and applicable to the first feature set is configured for the terminal device, the network device receives the message 1 from the terminal device on the first-type random access resource.

In a possible design solution, the method provided in the fourth aspect may further include: The network device sends first information to the terminal device. The first information indicates that the first-type random access resource is applicable to the first-type terminal and an SDT procedure triggered by the first-type terminal.

Optionally, the first information may be carried in a feature combination field.

In a possible design solution, the first-type terminal may include a first-type terminal supporting a first-type capability or a first-type terminal supporting a second-type capability. A maximum transmission rate of the first-type terminal supporting the first-type capability is less than a transmission rate of the second-type terminal, the maximum transmission rate of the first-type terminal supporting the first-type capability is determined based on a first parameter, and a baseband bandwidth of a data transmission channel of the first-type terminal supporting the first-type capability is less than a baseband bandwidth of a data transmission channel of the second-type terminal. A maximum transmission rate of the first-type terminal supporting the second-type capability is less than the transmission rate of the second-type terminal, and the maximum transmission rate of the first-type terminal supporting the first-type capability is determined based on a second parameter. The first parameter includes one or more of the following: a quantity of transport layers, a scaling factor, a modulation order, and a first threshold. The second parameter includes one or more of the following: a quantity of transport layers, a scaling factor, a modulation order, and a second threshold.

Optionally, the method provided in the fourth aspect may further include: The network device sends second information to the terminal device. The second information indicates that the first-type random access resource is applicable to the first-type terminal supporting the first-type capability and an SDT procedure triggered by the first-type terminal supporting the first-type capability.

For technical effects of the method provided in the fourth aspect, refer to technical effects of the method provided in the third aspect. Details are not described herein again.

According to a fifth aspect, an access control method is provided. The access control method includes: A terminal device receives third indication information from a network device. The third indication information indicates one or more of the following: a quantity of receive antennas of a first-type terminal that is barred from accessing the network device, or a duplex mode supported by the network device. The terminal device determines, based on the third indication information and capability information of the terminal device, whether to camp on a cell corresponding to the network device. The first-type terminal is an enhanced reduced capability terminal.

According to the access control method provided in the fifth aspect, the terminal device may receive the third indication information from the network device, and determine, based on the third indication information and the capability information of the terminal device, whether to camp on the cell corresponding to the network device. The third indication information indicates one or more of the following: a quantity of receive antennas of an enhanced reduced capability terminal that is barred from accessing the network device, or a duplex mode supported by the network device. In this way, when the capability information of the terminal device does not match the third indication information, the terminal device can avoid camping on the cell corresponding to the network device, and when the capability information of the terminal device matches the third indication information, the terminal device can camp on the cell corresponding to the network device, implementing access control over the terminal device.

In a possible design solution, determining, by the terminal device based on the third indication information and the capability information of the terminal device, whether to camp on the cell corresponding to the network device may include: When the capability information of the terminal device includes a quantity of receive antennas of the terminal device, if the quantity of receive antennas of the terminal device does not match the quantity of receive antennas indicated by the third indication information, the terminal device camps on the cell corresponding to the network device, and/or when the capability information of the terminal device includes a duplex mode of the terminal device, if the duplex mode of the terminal device is a duplex mode supported by the network device, the terminal device camps on the cell corresponding to the network device.

Optionally, the quantity of receive antennas indicated by the third indication information includes one receive antenna and/or two receive antennas, and the duplex mode indicated by the third indication information includes half-duplex frequency division duplex.

Optionally, the third indication information includes first sub indication information. The first sub indication information indicates a quantity of receive antennas of a first-type terminal that is barred from accessing the network device, and the first sub indication information further indicates a quantity of receive antennas of a second-type terminal that is barred from accessing the network device. In this way, the first sub indication information may be reused to indicate the quantity of receive antennas used by the first-type terminal to access the network device, reducing overheads. Alternatively, the third indication information may include second sub indication information. The second sub indication information indicates a quantity of receive antennas of a first-type terminal that is barred from accessing the network device.

Optionally, the third indication information includes third sub indication information. The third sub indication information indicates a duplex mode of a first-type terminal supported by the network device, and the third sub indication information further indicates a duplex mode of a second-type terminal supported by the network device. In this way, the first sub indication information may be reused to indicate the quantity of receive antennas used by the first-type terminal to access the network device, reducing overheads.

In a possible design solution, the third indication information may be carried in an access control field of a system information block.

According to a sixth aspect, an access control method is provided. The access control method includes: A network device generates third indication information, where the third indication information indicates one or more of the following: a quantity of receive antennas of a first-type terminal that is barred from accessing the network device, or a duplex mode supported by the network device. The network device sends the third indication information to a terminal device. The first-type terminal is an enhanced reduced capability terminal.

According to the access control method provided in the sixth aspect, the network device may generate the third indication information, and send the third indication information to the network device. The third indication information indicates one or more of the following: a quantity of receive antennas of an enhanced reduced capability terminal that is barred from accessing the network device, or a duplex mode supported by the network device. In this way, when the third indication information does not match capability information of the terminal device, the terminal device can avoid camping on a cell corresponding to the network device, and when the capability information of the terminal device matches the third indication information, the terminal device can camp on the cell corresponding to the network device, implementing access control over the terminal device.

Optionally, the quantity of receive antennas indicated by the third indication information includes one receive antenna and/or two receive antennas, and the duplex mode indicated by the third indication information includes half-duplex frequency division duplex.

Optionally, the third indication information includes first sub indication information. The first sub indication information indicates a quantity of receive antennas of a first-type terminal that is barred from accessing the network device, and the first sub indication information further indicates a quantity of receive antennas of a second-type terminal that is barred from accessing the network device. In this way, the first sub indication information may be reused to indicate the quantity of receive antennas used by the first-type terminal to access the network device, reducing overheads. Alternatively, the third indication information may include second sub indication information. The second sub indication information indicates a quantity of receive antennas of a first-type terminal that is barred from accessing the network device.

Optionally, the third indication information includes third sub indication information. The third sub indication information indicates a duplex mode of a first-type terminal supported by the network device, and the third sub indication information further indicates a duplex mode of a second-type terminal supported by the network device. In this way, the first sub indication information may be reused to indicate the quantity of receive antennas used by the first-type terminal to access the network device, reducing overheads.

In a possible design solution, the third indication information may be carried in an access control field of a system information block.

According to a seventh aspect, a communication method is provided. The communication method includes: A terminal device determines a third random access resource. The terminal device is an enhanced reduced capability first-type terminal, and when a random access resource set configured by a network device includes a random access resource applicable to the first-type terminal, the third random access resource is a random access resource applicable to the first-type terminal in the random access resource set. The terminal device sends a message 1 to the network device on the third random access resource.

According to the method provided in the seventh aspect, when a random access resource applicable to the first-type terminal exists, the terminal device may select the random access resource applicable to the first-type terminal, to perform random access.

In a possible design solution, when the random access resource set further includes a random access resource applicable to at least one feature in a first feature set, the third random access resource is a random access resource, in the random access resource set, that is applicable to the first-type terminal and a feature used to trigger the terminal device to perform random access, a feature used to trigger the terminal device to perform random access is a feature in the first feature set, and the first feature set includes one or more of the following features: small data transmission SDT, network slicing, or message 3 retransmission.

In a possible design solution, when the random access resource set includes a random access resource applicable to a second-type terminal and does not include a random access resource applicable to the first-type terminal, the third random access resource is the random access resource applicable to the second-type terminal in the random access resource set.

Optionally, when the random access resource set further includes a random access resource applicable to at least one feature in a first feature set, the third random access resource is a random access resource, in the random access resource set, that is applicable to the first-type terminal by the network device and a feature used to trigger the terminal device to perform random access, a feature used to trigger the terminal device to perform random access is a feature in the first feature set, and the first feature set includes one or more of the following features: small data transmission SDT, network slicing, or message 3 retransmission.

In a possible design solution, the terminal device selects the third random access resource from the random access resource set based on the feature used to trigger the terminal device to perform random access.

In a possible design solution, when the random access resource set includes a random access resource applicable to the first-type terminal and includes a random access resource whose applicable feature includes all features of a second feature set, the third random access resource is the random access resource, in the random access resource set, whose applicable feature includes the second feature set. When the random access resource set includes a random access resource applicable to the first-type terminal and does not include a random access resource whose applicable feature includes all the features of the second feature set, the third random access resource is a random access resource applicable to the first-type terminal in the random access resources set and applicable to a part of features of the second feature set and a first feature. The second feature set includes all first-type features used to trigger the terminal device to perform random access. The first feature is a feature with a highest priority among all first-type features applicable to all random access resources whose applicable feature is a part of features of the second feature set. The first-type feature is a resource other than random access resources of a feature of the enhanced reduced capability first-type terminal and a feature of a reduced capability second-type terminal. In this way, when a random access resource applicable to all the features of the second feature set exists, the random access resource applicable to all the features of the second feature set is selected for random access, better ensuring a communication requirement. When no random access resource applicable to all the features of the second feature set exists, a random access resource whose applicable feature set is a feature set of the second feature set and that meets the first feature set is preferentially selected for random access, better meeting a communication requirement.

According to an eighth aspect, a communication method is provided. The communication method includes: A network device receives a message 1 from a terminal device on a third random access resource. The terminal device is an enhanced reduced capability first-type terminal, and the third random access resource is a random access resource applicable to the first-type terminal in a random access resource set configured by the network device.

In a possible design solution, when the random access resource set further includes a random access resource applicable to at least one feature in a first feature set, the third random access resource is a random access resource, in the random access resource set, that is applicable to the first-type terminal and a feature used to trigger the terminal device to perform random access, a feature used to trigger the terminal device to perform random access is a feature in the first feature set, and the first feature set includes one or more of the following features: small data transmission SDT, network slicing, or message 3 retransmission.

In a possible design solution, when the random access resource set includes a random access resource applicable to a second-type terminal and does not include a random access resource applicable to the first-type terminal, the third random access resource is the random access resource applicable to the second-type terminal in the random access resource set.

Optionally, when the random access resource set further includes a random access resource applicable to at least one feature in a first feature set, the third random access resource is a random access resource, in the random access resource set, that is applicable to the first-type terminal by the network device and a feature used to trigger the terminal device to perform random access, a feature used to trigger the terminal device to perform random access is a feature in the first feature set, and the first feature set includes one or more of the following features: small data transmission SDT, network slicing, or message 3 retransmission.

In a possible design solution, when the random access resource set includes a random access resource applicable to the first-type terminal and includes a random access resource whose applicable feature includes all features of a second feature set, the third random access resource is the random access resource, in the random access resource set, whose applicable feature includes the second feature set. When the random access resource set includes a random access resource applicable to the first-type terminal and does not include a random access resource whose applicable feature includes all the features of the second feature set, the third random access resource is a random access resource applicable to the first-type terminal in the random access resources set and applicable to a part of features of the second feature set and a first feature. The second feature set includes all first-type features used to trigger the terminal device to perform random access. The first feature is a feature with a highest priority among all first-type features applicable to all random access resources whose applicable feature is a part of features of the second feature set.

For technical effects of the method provided in the eighth aspect, refer to technical effects of the communication method provided in the seventh aspect. Details are not described herein again.

According to a ninth aspect, a communication method is provided. The communication method includes: A terminal device determines a fourth random access resource. The fourth random access resource is a random access resource that is in a random access resource set configured by a network device and that is applicable to a second feature set, and the second feature set is a set of features used to trigger the terminal device to perform random access. Alternatively, the fourth random access resource is a random access resource applicable to a part of features of the second feature set and applicable to a first feature, and/or the fourth random access resource is a random access resource applicable to a second feature in the random access resource set. The first feature is a feature with a highest priority among all first-type features applicable to all random access resources whose applicable feature is a part of features of the second feature set. The second feature is a feature of an enhanced reduced capability first-type terminal applicable to a random access resource in the random access resource set, a feature of a reduced capability second-type terminal, or a feature with a higher priority between a feature of an enhanced reduced capability first-type terminal and a feature of a reduced capability second-type terminal. The terminal device sends a message 1 to the network device on the fourth random access resource.

According to the method provided in the ninth aspect, in the communication method, the terminal device may determine the fourth random access resource, and send the message 1 based on the fourth random access resource. In this way, a random access resource applicable to the entire second feature set or applicable to a feature with a high feature priority may be selected for random access.

In a possible design solution, the terminal device is the first-type terminal.

According to a tenth aspect, a communication method is provided. The communication method includes: A network device receives a message 1 from a terminal device on a fourth random access resource. The fourth random access resource is a random access resource that is in a random access resource set configured by the network device and that is applicable to a second feature set, and the second feature set is a set of features used to trigger the terminal device to perform random access. Alternatively, the fourth random access resource is a random access resource applicable to a part of features of the second feature set and applicable to a first feature, and/or the fourth random access resource is a random access resource applicable to a second feature in the random access resource set. The first feature is a feature with a highest priority among all first-type features applicable to all random access resources whose applicable feature is a part of features of the second feature set. The second feature is a feature of an enhanced reduced capability first-type terminal applicable to a random access resource in the random access resource set, a feature of a reduced capability second-type terminal, or a feature with a higher priority between a feature of an enhanced reduced capability first-type terminal and a feature of a reduced capability second-type terminal.

In a possible design solution, the terminal device is the first-type terminal.

For technical effects of the method provided in the tenth aspect, refer to technical effects of the communication method provided in the ninth aspect. Details are not described herein again.

According to an eleventh aspect, a communication apparatus is provided. The communication apparatus is configured to perform the method according to any one of the implementations of the first aspect to the tenth aspect.

In this application, the communication apparatus according to the eleventh aspect may be the terminal device according to any one of the first aspect, the third aspect, the fifth aspect, the seventh aspect, or the ninth aspect, or the network device according to any one of the second aspect, the fourth aspect, the sixth aspect, the eighth aspect, or the tenth aspect, or a chip (system) or another component that may be disposed in the terminal device or the network device, or an apparatus including the terminal device or the network device.

It should be understood that the communication apparatus according to the eleventh aspect includes a corresponding module, unit, or means (means) for implementing the method according to any one of the first aspect to the tenth aspect. The module, unit, or means may be implemented by hardware, software, or hardware executing corresponding software. The hardware or the software includes one or more modules or units configured to perform functions in the foregoing methods.

According to a twelfth aspect, a communication apparatus is provided. The communication apparatus includes a processor. The processor is configured to perform the method according to any one of the possible implementations of the first aspect to the tenth aspect.

In a possible design solution, the communication apparatus according to the twelfth aspect may further include a transceiver. The transceiver may be a transceiver circuit or an interface circuit. The transceiver may be used by the communication apparatus according to the twelfth aspect to communicate with another communication apparatus.

In a possible design solution, the communication apparatus according to the twelfth aspect may further include a memory. The memory and the processor may be integrated together, or may be separately disposed. The memory may be configured to store a computer program and/or data in the method according to any one of the first aspect to the tenth aspect.

In this application, the communication apparatus according to the twelfth aspect may be the terminal device according to any one of the first aspect, the third aspect, the fifth aspect, the seventh aspect, or the ninth aspect, or the network device according to any one of the second aspect, the fourth aspect, the sixth aspect, the eighth aspect, or the tenth aspect, or a chip (system) or another component that may be disposed in the terminal device or the network device, or an apparatus including the terminal device or the network device.

According to a thirteenth aspect, a communication apparatus is provided. The communication apparatus includes a processor. The processor is coupled to a memory, and the processor is configured to execute a computer program stored in the memory, to cause the communication apparatus to perform the method according to any one of the possible implementations of the first aspect to the tenth aspect.

In a possible design solution, the communication apparatus according to the thirteenth aspect may further include a transceiver. The transceiver may be a transceiver circuit or an interface circuit. The transceiver may be used by the communication apparatus according to the thirteenth aspect to communicate with another communication apparatus.

In this application, the communication apparatus according to the thirteenth aspect may be the terminal device according to any one of the first aspect, the third aspect, the fifth aspect, the seventh aspect, or the ninth aspect, or the network device according to any one of the second aspect, the fourth aspect, the sixth aspect, the eighth aspect, or the tenth aspect, or a chip (system) or another component that may be disposed in the terminal device or the network device, or an apparatus including the terminal device or the network device.

According to a fourteenth aspect, a communication apparatus is provided, which includes a processor and a memory. The memory is configured to store a computer program. When the processor executes the computer program, the communication apparatus is caused to perform the method according to any one of the implementations of the first aspect to the tenth aspect.

In a possible design solution, the communication apparatus according to the fourteenth aspect may further include a transceiver. The transceiver may be a transceiver circuit or an interface circuit. The transceiver may be used by the communication apparatus according to the fourteenth aspect to communicate with another communication apparatus.

In this application, the communication apparatus according to the fourteenth aspect may be the terminal device according to any one of the first aspect, the third aspect, the fifth aspect, the seventh aspect, or the ninth aspect, or the network device according to any one of the second aspect, the fourth aspect, the sixth aspect, the eighth aspect, or the tenth aspect, or a chip (system) or another component that may be disposed in the terminal device or the network device, or an apparatus including the terminal device or the network device.

According to a fifteenth aspect, a communication apparatus is provided, which includes a processor. The processor is configured to: be coupled to a memory; and after reading a computer program in the memory, perform, based on the computer program, the communication method in any one of the implementations of the first aspect to the tenth aspect.

In a possible design solution, the communication apparatus according to the fifteenth aspect may further include a transceiver. The transceiver may be a transceiver circuit or an interface circuit. The transceiver may be used by the communication apparatus according to the fifteenth aspect to communicate with another communication apparatus.

In this application, the communication apparatus according to the ninth aspect may be the terminal device according to any one of the first aspect, the third aspect, the fifth aspect, the seventh aspect, or the ninth aspect, or the network device according to any one of the second aspect, the fourth aspect, the sixth aspect, the eighth aspect, or the tenth aspect, or a chip (system) or another component that may be disposed in the terminal device or the network device, or an apparatus including the terminal device or the network device.

According to a sixteenth aspect, a processor is provided. The processor is configured to perform the method according to any one of the possible implementations of the first aspect to the tenth aspect.

According to a seventeenth aspect, a communication system is provided. The communication system includes one or more terminal devices and one or more network devices.

According to an eighteenth aspect, a computer-readable storage medium is provided, which includes a computer program or instructions. When the computer program or the instructions are run on a computer, the computer is caused to perform the method according to any one of the possible implementations of the first aspect to the tenth aspect.

According to a nineteenth aspect, a computer program product is provided, which includes a computer program or instructions. When the computer program or the instructions are run on a computer, the computer is caused to perform the method according to any one of the possible implementations of the first aspect to the tenth aspect.

In addition, for technical effects of the communication apparatus according to the eleventh aspect to the nineteenth aspect, refer to technical effects of the method according to the first aspect to the tenth aspect. Details are not described herein again.

### BRIEF DESCRIPTION OF DRAWINGS

FIG. 1 is a schematic flowchart of contention-based random access according to an embodiment of this application;
FIG. 2 is a schematic flowchart of non-contention-based random access according to an embodiment of this application;
FIG. 3 is a diagram of an architecture of a communication system according to an embodiment of this application;
FIG. 4 is a schematic flowchart of a random access resource selection method according to an embodiment of this application;
FIG. 5 is a diagram 1 of random access resource distribution according to an embodiment of this application;
FIG. 6 is a diagram 2 of random access resource distribution according to an embodiment of this application;
FIG. 7 is a schematic flowchart of a communication method according to an embodiment of this application;
FIG. 8 is a schematic flowchart 1 of an access control method according to an embodiment of this application;
FIG. 9 is a schematic flowchart 2 of an access control method according to an embodiment of this application;
FIG. 10 is a schematic flowchart of another communication method according to an embodiment of this application;
FIG. 11 is a schematic flowchart of another communication method according to an embodiment of this application;
FIG. 12 is a diagram 1 of a structure of a communication apparatus according to an embodiment of this application; and
FIG. 13 is a diagram 2 of a structure of a communication apparatus according to an embodiment of this application.

### DESCRIPTION OF EMBODIMENTS

A random access procedure may be used to establish a wireless connection between a terminal device and a network device. Random access (random access, RA) includes contention-based RA and non-contention-based RA.

The following describes contention-based RA and non-contention-based RA with reference to specific procedures.

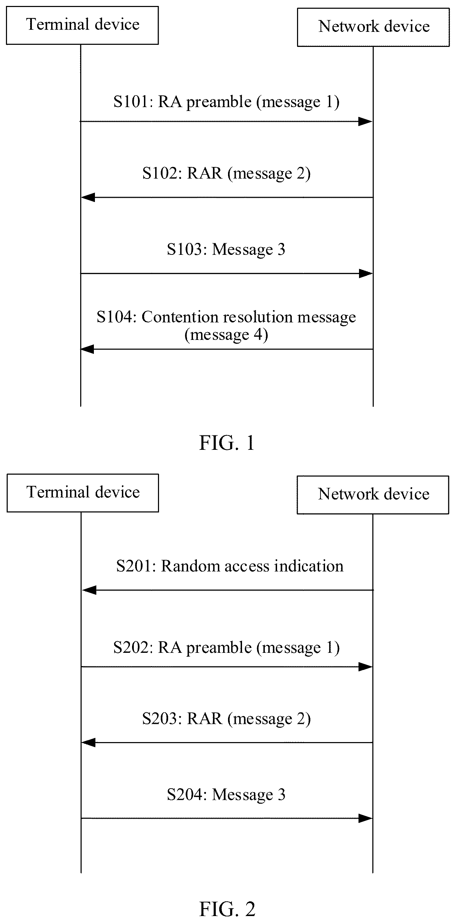

FIG. 1 is a schematic flowchart of contention-based RA. As shown in FIG. 1, the contention-based RA includes the following S101 to S104.

S101: A terminal device sends an RA preamble (preamble) to a network device. Correspondingly, the network device receives the RA preamble from the terminal device.

The RA preamble is used for estimating an uplink time difference between the terminal device and the network device.

The RA preamble may alternatively be referred to as a first message, a message 1 (message 1, Msg1), or a message 1 in an RA process.

S102: The network device sends a random access response (random access response, RAR) to the terminal device in response to the RA preamble. Correspondingly, the terminal device receives the RAR from the network device.

The RAR includes an uplink time difference between the terminal device and the network device. The uplink time difference is determined by the network device based on the received RA preamble.

The RAR may further indicate that the network device has successfully received the RA preamble from the terminal device.

The RAR is alternatively referred to as a message 2 in the RA process, or may be referred to as a message 2 (message 2, Msg2), or a second message.

The RAR may be carried on a physical downlink shared channel (physical downlink shared channel, PDSCH).

It may be understood that RARs respectively corresponding to multiple terminal devices may be carried on a same PDSCH.

S103: The terminal device sends a message 3 to the network device. Correspondingly, the network device receives the message 3 from the terminal device.

The message 3 may alternatively be referred to as a message 3 (message 3, Msg3) or a third message.

The message 3 carries an identifier of the terminal device, and the identifier of the terminal device is used to identify the terminal device. The identifier of the terminal device may be used to distinguish whether the terminal device collides with another terminal device, and therefore may be used for conflict resolution, that is, contention resolution. For example, the identifier of the terminal device may be an identity (identity, ID) of the terminal device. For another example, the network device is a cell. Assuming that the terminal device has been connected to another cell before the terminal device performs S103, the identifier of the terminal device may be a cell radio network temporary identifier (cell radio network temporary identifier, C-RNTI) to which the terminal device has been connected. The C-RNTI may be used to identify a terminal device connected to a cell. In other words, in a cell, C-RNTIs are in one-to-one correspondence with terminal devices connected to the cell. Assuming that the terminal device is not connected to another cell before the terminal device performs S103, the identifier of the terminal device may be an identifier from a core network.

S104: The network device sends a contention resolution (contention resolution) message to the terminal device. Correspondingly, the terminal device receives the contention resolution message from the network device.

The contention resolution message may alternatively be referred to as a message 4, a message 4 (message 4, Msg4), or a fourth message in the RA process.

The contention resolution message carries a cell radio network temporary identifier (cell radio network temporary identifier, C-RNTI) of a terminal device that successfully contends for a channel.

For the terminal device, after sending the message 3, the terminal device starts a contention resolution timer. After the timer is started, the terminal device monitors a physical downlink control channel (physical downlink control channel, PDCCH) in a timing window. In a possible design solution, duration of the contention resolution timer may be 64 milliseconds (millisecond, ms).

Before the contention resolution timer expires, the terminal device keeps monitoring the PDCCH to determine whether the contention resolution succeeds, that is, determine whether the terminal device successfully accesses the network. When the terminal device determines that the contention resolution succeeds, the terminal device stops the contention resolution timer. For example, in Case 1.1 or Case 1.2 below, the terminal device determines that the contention resolution succeeds.

Case 1.1: The terminal device obtains the C-RNTI of the terminal device through PDCCH monitoring based on the contention resolution message. In this case, the terminal device stops the contention resolution timer, and discards a temporary C-RNTI (temporary C-RNTI).

Case 1.2: The terminal device obtains a temporary C-RNTI of the terminal device through PDCCH monitoring based on the contention resolution message, and a terminal device contention resolution identity (contention resolution identity) carried in a media access control protocol data unit (media access control protocol data unit, MAC PDU) received by the terminal device from the PDSCH is the same as a terminal device contention resolution identity carried in the message 3, that is, MAC PDU decoding succeeds. In this case, the terminal device stops the contention resolution timer, and determines the temporary C-RNTI as the C-RNTI.

Before the terminal device determines that the contention resolution succeeds, the terminal device does not stop the contention resolution timer. If the contention resolution timer expires, the terminal device discards the temporary C-RNTI, and determines that the contention resolution fails. In this case, further, if a quantity of RA attempts by the terminal device is less than or equal to an attempt threshold, the terminal device attempts RA again. If the contention resolution timer expires and the quantity of RA attempts by the terminal device is greater than the attempt threshold, the RA fails.

FIG. 2 is a schematic flowchart of non-contention-based RA. As shown in FIG. 2, the non-contention-based RA includes the following S201 to S204.

S201: A network device allocates an RA preamble to a terminal device.

In a possible design solution, the RA preamble may be carried in radio resource control (radio resource control, RRC) signaling.

In another possible design solution, the random access indication may be carried on a PDCCH.

When sending the random access indication to the terminal device, the network device indicates a synchronization signal and physical broadcast channel block (synchronization signal and physical broadcast channel block, SSB) to the UE.

S202: The terminal device sends a random access preamble to the network device. Correspondingly, the network device receives the random access preamble from the terminal device.

For implementation of the random access preamble, refer to the implementation principle of the random access preamble in S101.

Before S202, the terminal device may receive a system information block 1 (system information block 1, SIB1), to obtain a physical random access channel (physical random access channel, PRACH) configuration from the SIB1. The PRACH configuration includes a time-frequency position, namely, a time domain position and a frequency domain position, at which the terminal device sends the RA preamble.

S203: The network device sends a message 2 to the terminal device in response to a message 1. Correspondingly, the terminal device receives the message 2 from the network device.

For an implementation principle of the message 2, refer to the implementation principle of the message 2 in S102. For an implementation principle of S203, refer to related descriptions of S102. Details are not described herein again.

S204: The terminal device sends a message 3 to the network device. Correspondingly, the network device receives the message 3 from the terminal device.

For example, the terminal device may send the message 3 to the network device at a preset sending moment based on a timing advance (timing advance, TA, where the TA may alternatively be referred to as timing alignment information).

For an implementation principle of the message 3, refer to related descriptions of the message 3 in S103. Details are not described herein again.

It should be noted that, in the following embodiments, unless otherwise specified, the message 1, the message 2, the message 3, and the message 4 are used for description.

In a wireless communication protocol, a reduced capability terminal and a non-reduced capability terminal (which may also be referred to as a legacy terminal) are defined. The reduced capability terminal may send a message 1 on a random access resource configured for the reduced capability terminal, for example, a reduced capability specific message 1 resource defined in R17, to perform random access, and the non-reduced capability terminal may send a message 1 on a random access resource of the non-reduced capability terminal, for example, a legacy message 1 resource, to perform random access. In R18, an enhanced reduced capability terminal is proposed. However, in R18, a resource for sending the message 1 is not defined. How to select the resource for sending the message 1 to implement random access of the enhanced reduced capability terminal is an urgent problem to be resolved. In addition, in a wireless communication protocol, corresponding random access resources may be configured for terminal devices having different features, so that the terminal devices perform random access and implement another function, for example, small data transmission. For a reduced capability terminal device, a corresponding random access resource may be configured for the terminal device currently. After the enhanced reduced capability terminal device is introduced, for the enhanced reduced capability terminal device, a corresponding random access resource may not be configured. As a result, the enhanced reduced capability terminal device cannot perform random access or implement another function, for example, small data transmission. How to select the resource for sending the message 1 to implement random access of the enhanced reduced capability terminal is an urgent problem to be resolved.

Different random access resources have different features, in other words, different random access resources may be applicable to different features. These features may be related to a random access procedure triggered by the terminal device. For an enhanced reduced capability terminal device, how to select, from resources with different features, a resource for random access is an urgent problem to be resolved.

To resolve the foregoing problem of random access resource selection, an embodiment of this application provides a random access resource selection method. In the random access resource selection method, a terminal device may determine a first random access resource from a random access resource of a first-type terminal and/or a random access resource of a second-type terminal, and send a message 1 based on the first random access resource. The terminal device is an enhanced reduced capability terminal, the second-type terminal is a reduced capability terminal, and the third-type terminal is a non-reduced capability terminal. In this way, random access of the first-type terminal can be implemented.

To resolve the foregoing random access resource selection problem, an embodiment of this application further provides a communication method. In the communication method, for a terminal device that is an enhanced reduced capability terminal device, the terminal device may select a resource from a random access resource of a reduced capability terminal device, and send a message 1 on the selected resource, to perform random access.

In addition, to resolve the foregoing access control problem, an embodiment of this application further provides an access control method. In the access control method, a network device may send third indication information to a terminal device, and correspondingly, the terminal device may receive the third indication information from the network device. The third indication information indicates one or more of the following: a transmit/receive mode of an enhanced reduced capability terminal that is barred from accessing the network device, or a duplex mode supported by the network device. After receiving the third indication information, the terminal device may determine, based on a matching status between a transmit/receive mode or a duplex mode of the terminal device and the third indication information, whether to camp on a cell corresponding to the network device. In this way, access control can be implemented.

The following describes technical solutions of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, 4th generation (4th generation, 4G) mobile communication systems such as a long term evolution (long term evolution, LTE) system, a worldwide interoperability for microwave access (worldwide interoperability for microwave access, WiMAX) communication system, 5th generation (5th generation, 5G) mobile communication systems such as a new radio (new radio, NR) system, and future communication systems such as a 6th generation (6th generation, 6G) mobile communication system.

All aspects, embodiments, or features are presented in this application by describing a system that may include multiple devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

Network architectures and service scenarios described in embodiments of this application are intended to more clearly describe the technical solutions in embodiments of this application, but are not intended to limit the technical solutions provided in embodiments of this application. A person of ordinary skill in the art may know that as network architectures evolve and new service scenarios emerge, the technical solutions provided in embodiments of this application are also applicable to a similar technical problem.

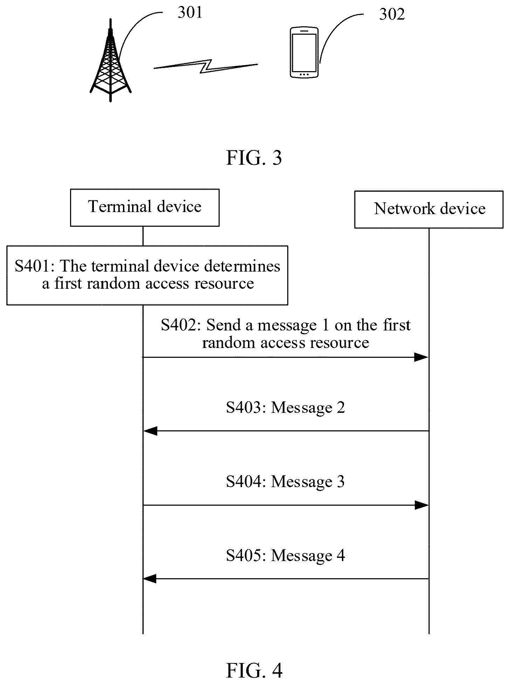

For ease of understanding embodiments of this application, a communication system shown in FIG. 3 is first used as an example to describe in detail a communication system applicable to embodiments of this application. For example, FIG. 3 is a diagram of an architecture of a communication system to which a method according to an embodiment of this application is applicable.

As shown in FIG. 3, the communication system includes a network device 301 and a terminal device 302.

The network device 301 may exchange information with the terminal device 302.

In addition, the communication system shown in FIG. 3 may further include another network device or terminal device, and a network element. For example, the communication system shown in FIG. 3 may further include a mobility management function (access and mobility management function, AMF) network element (not shown in FIG. 3).

The network device is a device located on a network side of the communication system and having a wireless transceiver function, or a chip or a chip system that can be disposed in the device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, a transmission point (transmission reception point, TRP; or transmission point, TP), or the like. The network device may alternatively be a gNB or a transmission point (TRP or TP) in a 5G system, for example, a new radio (new radio, NR) system, or one antenna panel or a group of antenna panels (including multiple antenna panels) of a base station in a 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

The terminal device is a terminal that accesses the communication system and that has a wireless transceiver function, or a chip or a chip system that can be disposed in the terminal. The terminal device may also be referred to as an access terminal, a subscriber unit, a subscriber station, a mobile station, a mobile console, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a vehicle-mounted terminal, an RSU having a terminal function, or the like. The terminal device in this application may alternatively be a vehicle-mounted module, a vehicle-mounted module assembly, a vehicle-mounted component, a vehicle-mounted chip, or a vehicle-mounted unit that is built in a vehicle as one or more components or units. The vehicle may use the vehicle-mounted module, the vehicle-mounted module assembly, the vehicle-mounted component, the vehicle-mounted chip, or the vehicle-mounted unit that is built in the vehicle, to implement the method provided in this application.

It should be noted that the method provided in embodiments of this application is applicable to the terminal device and the network device shown in FIG. 3. For a specific implementation, refer to the following method embodiments. Details are not described herein.

It should be noted that the solutions in embodiments of this application may also be applied to another communication system, and a corresponding name may also be replaced with a name of a corresponding function in the another communication system.

It should be understood that FIG. 3 is merely a simplified diagram of an example for ease of understanding. The communication system may further include another network device and/or another terminal device that are/is not shown in FIG. 3.

The following specifically describes the random access resource selection method provided in embodiments of this application with reference to FIG. 4 to FIG. 6.

For example, FIG. 4 is a schematic flowchart of a random access resource selection method according to an embodiment of this application. The random access resource selection method may be applicable to communication between the terminal device and the network device shown in FIG. 3.

As shown in FIG. 4, the random access resource selection method includes S401 to S405.

S401: A terminal device determines a first random access resource.

The terminal device is an enhanced reduced capability (enhanced reduced capability, eRedCap) first-type terminal, and the first random access resource includes a random access resource of a second-type terminal or a random access resource of a third-type terminal. The second-type terminal is a reduced capability (reduced capability, RedCap) terminal, the third-type terminal is a non-reduced capability terminal, the random access resource of the second-type terminal is used by the second-type terminal for random access to a network device, and the random access resource of the third-type terminal is used by the third-type terminal for random access to the network device.

It may be understood that S401 may be performed when no random access resource of the first-type terminal is configured for the terminal device.

It may be understood that a bandwidth used by the first-type terminal for communication is less than a bandwidth used by the second-type terminal for communication, and the bandwidth used by the first-type terminal for communication is less than a bandwidth used by the third-type terminal for communication. The bandwidth used by the second-type terminal for communication is less than the bandwidth used by the third-type terminal for communication.

That the random access resource of the second-type terminal is used by the second-type terminal for random access to the network device may mean that the random access resource of the second-type terminal is used by the second-type terminal to send a message 1, to perform random access to the network device. It may also be understood that when accessing the network device, the second-type terminal sends the message 1 by using the random access resource of the second-type terminal.

That the random access resource of the third-type terminal is used by the third-type terminal for random access to the network device may mean that the random access resource of the third-type terminal is used by the third-type terminal to send a message 1, to perform random access to the network device. It may also be understood that when accessing the network device, the third-type terminal sends the message 1 by using the random access resource of the third-type terminal.

For example, the first-type terminal may be an eRedCap terminal, the second-type terminal may be a RedCap terminal, and the third-type terminal may also be referred to as a legacy (legacy) terminal.

For example, when the second-type terminal is RedCap, the random access resource of the second-type terminal may be a RedCap specific message 1 resource defined in R17. The random access resource of the third-type terminal may be referred to as a legacy message 1 resource (legacy Msg1 resource).

In a possible design solution, configuration information may be preconfigured in the terminal device, and the configuration information indicates one or more of the following: the random access resource of the second-type terminal or the random access resource of the third-type terminal.

The following describes the configuration information in different cases.

Case 2.1: The random access resource of the second-type terminal is configured for the terminal device. For example, Case 2.1 may include: The random access resource of the second-type terminal is configured for the terminal device; or the random access resource of the second-type terminal and the random access resource of the third-type terminal are configured for the terminal device.

Optionally, in Case 2.1, a priority of the random access resource of the second-type terminal may be higher than a priority of the random access resource of the third-type terminal.

In this case, S401 may include: The terminal device determines the first random access resource based on the random access resource of the second-type terminal.

When the random access resource of the second-type terminal and the random access resource of the third-type terminal are configured for the terminal device, in S401, the terminal device may preferentially determine the random access resource of the second-type terminal as the first random access resource. The terminal device preferentially determines the random access resource of the second-type terminal as the first random access resource. In other words, the terminal device selects a random access resource by using a backoff mechanism. A bandwidth of the random access resource of the second-type terminal is less than a bandwidth of the random access resource of the third-type terminal. Therefore, when the random access resource of the second-type terminal and the random access resource of the third-type terminal are configured for the terminal device, the terminal device sends the message 1 on the random access resource of the second-type terminal, reducing overheads.

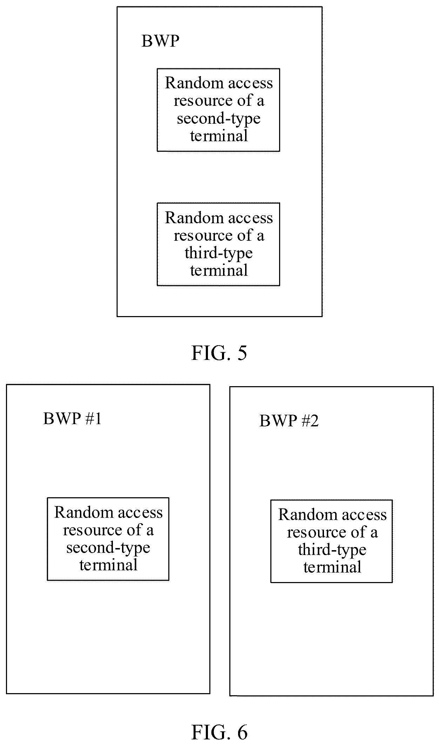

Optionally, in Case 2.1, as shown in FIG. 5, when the random access resource of the second-type terminal and the random access resource of the third-type terminal are configured for the terminal device, the random access resource of the second-type terminal and the random access resource of the third-type terminal may be included in a same bandwidth part (bandwidth part, BWP).

When the random access resource of the second-type terminal and the random access resource of the third-type terminal are included in a same BWP, further, the method provided in FIG. 4 may further include: The network device sends first indication information to the terminal device; and correspondingly, the terminal device receives the first indication information from the network device.

The first indication information indicates the first random access resource. In this case, S401 may include: The terminal device determines the first random access resource based on the first indication information.

The first indication information may be carried in a system message 1, that is, an SIB1, or the first indication information is a system message 1.

Example 1: It is assumed that a random access resource may be indicated by using an identifier of the random access resource. In this case, the first indication information may indicate the identifier of the random access resource. The terminal device may determine, as the first random access resource, the random access resource indicated by the identifier of the random access resource. For example, if the first indication information indicates an identifier of the random access resource of the second-type terminal, the terminal device may determine the random access resource of the second-type terminal as the first random access resource. For another example, if the first indication information indicates an identifier of the random access resource of the third-type terminal, the terminal device may determine the random access resource of the third-type terminal as the first random access resource.

Example 2: The first indication information may indicate the first random access resource by using a bit (bit). It is assumed that the random access resource of the first-type terminal is not defined in the protocol, and the random access resource of the second-type terminal and the random access resource of the third-type terminal are defined. In this case, the first indication information may indicate the random access resource by using 1 bit. For example, the random access resource of the second-type terminal may be identified by using "1", and the random access resource of the third-type terminal may be identified by using "0". If the first indication information is "1", the terminal device may determine the random access resource of the second-type terminal as the first random access resource. If the first indication information is "0", the terminal device may determine the random access resource of the third-type terminal as the first random access resource.

It may be understood that the bit-based indication principle of the first indication information is merely used as an example. In actual implementation, the random access resource of the second-type terminal may alternatively be identified by using "0", and the random access resource of the third-type terminal is identified by using "1".

In addition, when three or more types of random access resources are defined in the protocol, two or more bits may be used to indicate the random access resource. Details are not described herein again.

In embodiments of this application, unless otherwise specified, the random access resource is a resource used to carry a message 1. Details are not described subsequently.

Optionally, as shown in FIG. 6, the random access resource of the second-type terminal and the random access resource of the third-type terminal may be included in different BWPs.

For example, the random access resource of the second-type terminal may be included in a BWP #1, and the random access resource of the second-type terminal may be included in a BWP #2.

Case 2.2: The random access resource of the third-type terminal is configured for the terminal device.

In Case 2.2, S401 may include: When no random access resource of the first-type terminal and no random access resource of the second-type terminal are configured for the terminal device, the terminal device determines the random access resource of the third-type terminal as the first random access resource.

In this way, when no random access resource of the second-type terminal is configured, the third-type random access resource may be used to implement random access, to successfully complete random access and implement uplink synchronization, improving communication efficiency.

S402: The terminal device sends a message 1 to the network device on the first random access resource. Correspondingly, the network device receives the message 1 from the terminal device on the first random access resource.

The message 1 is used by the terminal device for random access to the network device.

For an implementation principle of the message 1, refer to related descriptions of the message 1 in S101 or S202. For an implementation principle of S402, refer to related descriptions in S101 or S202. Details are not described herein again.

S403: The network device sends a message 2 to the terminal device based on the message 1. Correspondingly, the terminal device receives the message 2 from the network device.

In a possible design solution, the message 2 may further indicate a TA for sending information by the terminal device to the network device, a delay of sending a message 3 by the terminal device, and a bandwidth occupied by the terminal device for sending the message 3. The delay of sending the message 3 by the terminal device is greater than a delay of sending the message 3 by the second-type terminal and a delay of sending the message 3 by the third-type terminal, and the bandwidth occupied by the terminal device for sending the message 3 is less than a bandwidth occupied by the second-type terminal for sending the message 3 and a bandwidth occupied by the second-type terminal for sending the message 3.

Because the terminal device is the first-type terminal, the delay T of sending the message 3 by the terminal device is T=T1+T2+m. T1 is a delay of sending the message 1 by the second-type terminal, T2 is a delay of sending the message 2 by the second-type terminal, and m is a delay caused by a resource bandwidth decrease of the first-type terminal relative to the second-type terminal.

It may be understood that the message 3 includes an identifier of the terminal device.

The identifier of the terminal device in the message 3 may be a logical channel identifier (logical channel identifier, LCID).

Optionally, the method provided in FIG. 4 may further include S404.

S404: The terminal device sends a message 3 to the network device based on the message 2. Correspondingly, the network device receives the message 3 from the terminal device.

The message 3 further indicates that the terminal device is the first-type terminal.

In this way, the terminal device indicates, in the message 3, that the terminal device is the first-type terminal, so that the network device can obtain a type of the terminal device in time, and the network device performs resource scheduling based on the type of the terminal device.

It may be understood that the method provided in FIG. 4 may be applied to a contention-based RA procedure, or may be applied to a non-contention-based RA procedure.

In some possible design solutions, the terminal device accesses the network device by using the non-contention-based RA procedure. In this case, for an implementation principle of the message 3 in S404, refer to related descriptions of the message 3 in S204. For an implementation principle of S404, refer to related descriptions in S204. Details are not described herein again.

In some other possible design solutions, the terminal device accesses the network device by using the contention-based RA procedure. In this case, for an implementation principle of the message 3 in S404, refer to related descriptions of the message 3 in S103. For an implementation principle of S404, refer to related descriptions in S103. Details are not described herein again.

When the terminal device accesses the network device by using the contention-based RA procedure, after S403, the method provided in FIG. 4 may further include S405.

S405: The network device sends a message 4 to the terminal device. Correspondingly, the terminal device receives the message 4 from the network device.

For an implementation principle of the message 4 in S405, refer to related descriptions of the message 4 in S104. For an implementation principle of S405, refer to related descriptions in S104. Details are not described herein again.

In a possible design solution, the method provided in FIG. 4 may further include Step 1.

Step 1: The network device sends second indication information to the terminal device. The terminal device receives the second indication information from the network device. The second indication information indicates that the first-type terminal is allowed to access the network device.

The second indication information may be carried in the SIB1. For example, the second indication information may indicate an identifier of the first-type terminal in a cell selection parameter of the SIB1, to indicate that the first-type terminal is allowed to access the network device. Alternatively, the second indication information may be implemented by using a bit. For example, a bit "1" indicates that the first-type terminal is allowed to access the network device. For another example, a bit "0" indicates that the first-type terminal is allowed to access the network device. Alternatively, the second indication information may be implemented by using an intra frequency reselection identify (intra frequency reselection identify, IFRI). If the IFRI exists in the SIB1, the first-type terminal is allowed to access the network device.

In this way, the terminal device may perform the random access procedure after receiving the second indication information, implementing management of different types of terminals by the network device.

Based on the solution provided in FIG. 4, the terminal device may determine the first random access resource, where the terminal device is the enhanced reduced capability first-type terminal, the first random access resource is the random access resource of the second-type terminal or the random access resource of the third-type terminal, and the terminal device sends the message 1 on the first random access resource. The network device may receive the message on the first random access resource, and start to send the message 2. In this way, when no random access resource of the first-type terminal is configured, the random access resource of the second-type terminal or the random access resource of the third-type terminal may be used to send the message 1, to implement random access of the first-type terminal.

In a possible design solution, before the network device receives the message 1 from the terminal device on the first random access resource, the method provided in FIG. 4 may further include Step 2 to Step 4.

Step 2: The network device generates third indication information. The third indication information indicates one or more of the following: a transmit/receive mode of an enhanced reduced capability terminal that is barred from accessing the network device, or a duplex mode supported by the network device.

Step 3: The network device sends the third indication information to the terminal device. Correspondingly, the terminal device receives the third indication information from the network device.

The third indication information indicates one or more of the following: a transmit/receive mode of a first-type terminal that is barred from accessing the network device, or a duplex mode supported by the network device.

The transmit/receive mode of the first-type terminal includes a quantity of receive antennas of the first-type terminal, and may further include a quantity of transmit antennas of the terminal device. For the first-type terminal, the quantity of transmit antennas of the terminal device is 1. In this case, the transmit/receive mode of the terminal device may be the quantity of receive antennas of the terminal device.

The transmit/receive mode of the first-type terminal includes that the first-type terminal may include one receive antenna or two receive antennas.

The duplex mode is whether two devices communicating with each other can synchronously transmit uplink data and downlink data between each other, whether slots used for transmitting uplink data and transmitting downlink data are the same, or whether frequencies (center frequencies) used for transmitting uplink data and transmitting downlink data are the same. The duplex mode supported by the network device may include half-duplex frequency division duplex (half duplex-frequency division duplex, HD-FDD).

For example, the third indication information may indicate the transmit/receive mode of the first-type terminal that is barred from accessing the network device. Alternatively, the third indication information may indicate the duplex mode supported by the network device. Alternatively, the third indication information may indicate the transmit/receive mode of the enhanced reduced capability terminal device that is barred from accessing the network device, and the duplex mode supported by the network device.

In a possible design solution, the third indication information may be carried in a system message. For example, the third indication information may be carried in the SIB1 of the system message.

For example, the third indication information may be carried in an access control field of the SIB1.

The following describes the third indication information by using an example in which the transmit/receive mode of the first-type terminal includes the quantity of receive antennas of the first-type terminal, and the duplex mode supported by the network device includes HD-FDD.

Optionally, the third indication information may reuse information in the protocol release 17 (release 17, R17).

The third indication information includes first sub indication information. The first sub indication information indicates a quantity of receive antennas of a first-type terminal that is barred from accessing the network device, and the first sub indication information further indicates a quantity of receive antennas of a second-type terminal that is barred from accessing the network device.

If a terminal device with one receive antenna is barred from accessing the network device, "cellBarredRedCap11Rx-r17" in the access control field may be used to indicate that a terminal device with one receive antenna is barred from accessing the network device. In this case, the first sub indication information included in the access control field includes "cellBarredRedCap1Rx-r17". If the third indication information indicates that a terminal device with two receive antennas is barred from accessing the network device, information "cellBarredRedCap2Rx-r17" in the access control field may be used to indicate that a terminal device with two receive antennas is barred from accessing the network device. In this case, the first sub indication information includes the information "cellBarredRedCap2Rx-r17".

Alternatively, optionally, the third indication information may use other information to indicate the quantity of receive antennas of the first-type terminal that is barred from accessing the network device. The third indication information includes second sub indication information. The second sub indication information indicates a quantity of receive antennas of a first-type terminal that is barred from accessing the network device. For example, the second sub indication information may be "cellBarredRedCap1Rx-r18" added to the access control field, to indicate that a terminal device with one receive antenna is barred from accessing the network device, and/or the second sub indication information may be "cellBarredRedCap2Rx-r18" added to the access control field, to indicate that a terminal device with two receive antennas is barred from accessing the network device.

Optionally, the third indication information may include third sub indication information. The third sub indication information indicates a duplex mode of a first-type terminal supported by the network device, and the third sub indication information further indicates a duplex mode of a second-type terminal supported by the network device. If the third indication information indicates that the duplex mode supported by the network device includes HD-FDD, information "halfDuplexRedCapAllowed" in the access control field may be used to indicate that the duplex mode supported by the network device includes HD-FDD. In this case, "halfDuplexRedCapAllowed" is used for the third sub indication information.

The third indication information may be carried in a master information block (master information block, MIB) or an SIB1.

When the third indication information is carried in the MIB1, the third indication information may be specifically carried in a cell barred field (cellBarred field).

Step 4: The terminal device determines, based on the third indication information and capability information of the terminal device, whether to camp on a cell corresponding to the network device.

Step 4 is described below with reference to different cases of the indication information.

Case 3.1: The third indication information indicates a quantity of receive antennas of a terminal device that is barred (barred) from accessing the network device.

In this case, Step 4 may include: If the quantity of receive antennas of the terminal device does not match the quantity of receive antennas indicated by the third indication information, the terminal device camps on the cell corresponding to the network device.

That the quantity of receive antennas of the terminal device does not match the quantity of receive antennas indicated by the third indication information means that the quantity of receive antennas of the terminal device is not included in the quantity of receive antennas indicated by the third indication information. For example, if the quantity of receive antennas indicated by the third indication information is two receive antennas, and the quantity of receive antennas of the terminal device is one receive antenna, the quantity of receive antennas of the terminal device does not match the quantity of receive antennas indicated by the third indication information. For another example, if the quantity of receive antennas indicated by the third indication information is one receive antenna, and the quantity of receive antennas of the terminal device is two receive antennas, the quantity of receive antennas of the terminal device does not match the quantity of receive antennas indicated by the third indication information. For another example, if the third indication information does not indicate the quantity of receive antennas, and the quantity of receive antennas of the terminal device is two receive antennas and/or one receive antenna, the quantity of receive antennas of the terminal device does not match the quantity of receive antennas indicated by the third indication information. Details are not described subsequently.

Step 4 may further include: If the quantity of receive antennas of the terminal device is the same as the quantity of receive antennas indicated by the third indication information, the terminal device does not camp on the cell corresponding to the network device.

For example, if the third indication information indicates that a terminal device with one receive antenna (1 receive, 1Rx) is not barred from accessing the network device, and if the terminal device has one receive antenna, the terminal device camps on the cell corresponding to the network device.

For another example, if the third indication information indicates that a terminal device with one receive antenna (receives) is barred from accessing the network device, and if the terminal device has one receive antenna, the terminal device does not camp on the cell corresponding to the network device.

Case 3.2: The third indication information indicates a duplex mode supported by the network device. In this case, Step 4 may include: If the duplex mode of the terminal device is the duplex mode supported by the network device, the terminal device camps on the cell corresponding to the network device.

Step 4 may further include: If the duplex mode of the terminal device is not the duplex mode supported by the network device, the terminal device does not camp on the cell corresponding to the network device.

For example, if the third indication information indicates that the duplex mode supported by the network device is HD-FDD, and the duplex mode supported by the terminal device is HD-FDD, the terminal device camps on the cell corresponding to the network device.

For another example, if the third indication information indicates that the duplex mode supported by the network device is full duplex-frequency division duplex (full duplex-frequency division duplex, FD-FDD), and the duplex mode supported by the terminal device is HD-FDD, the terminal device does not camp on the cell corresponding to the network device.

Case 3.3: The third indication information indicates a quantity of receive antennas of an enhanced reduced capability terminal device that is barred from accessing the network device, and a duplex mode supported by the network device. In this case, Step 4 may include: If the quantity of receive antennas of the terminal device does not match the quantity of receive antennas indicated by the third indication information, and the duplex mode of the terminal device is the duplex mode supported by the network device, the terminal device camps on the cell corresponding to the network device.

Step 4 may further include: If the quantity of receive antennas of the terminal device is the same as the quantity of receive antennas indicated by the third indication information, or the duplex mode of the terminal device is not the duplex mode supported by the network device, the terminal device does not camp on the cell corresponding to the network device.

In a possible design solution, the method provided in FIG. 4 may further include Step 5.

Step 5: The network device sends fourth indication information to the terminal device. Correspondingly, the terminal device receives the fourth indication information from the network device.

The fourth indication information indicates a resource for data transmission between the terminal device and the network device. A bandwidth of the resource for data transmission between the terminal device and the network device is less than or equal to a bandwidth threshold.

The fourth indication information may be carried in the SIB1.

The bandwidth threshold may be determined based on bandwidth requirements of different types of terminal devices. For example, for the first-type terminal, whose bandwidth requirement is less than or equal to 5 megahertz, the bandwidth threshold may be 5 megahertz. It may be understood that the bandwidth threshold herein is merely used as an example. In an actual implementation process, the bandwidth threshold may be another value. Details are not described herein again.

In this way, the network device sends the third indication information to the terminal device, so that before performing the random access procedure, the terminal device may select to camp on a cell that corresponds to the network device and that matches the capability information of the terminal device, improving communication efficiency.

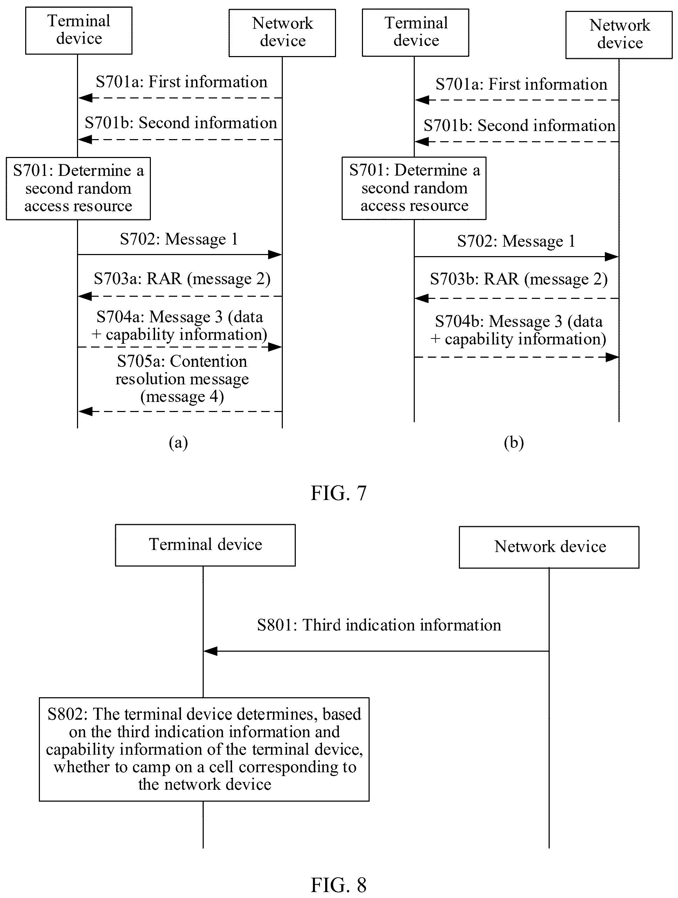

In some embodiments, when no random access resource of the enhanced reduced capability terminal is configured in the network, for example, when no dedicated random access resource is configured for the enhanced reduced capability terminal to avoid network resource fragmentation, the terminal device may select a random access resource from a random access resource configured for another type of terminal device, to perform random access. For ease of understanding, further description is made below with reference to FIG. 7.

FIG. 7 is a schematic flowchart of a communication method according to an embodiment of this application. As shown in FIG. 7, the method includes the following steps.

S701: A terminal device determines a second random access resource.

The terminal device is an enhanced reduced capability first-type terminal, and the second random access resource includes a first-type random access resource applicable to a second-type terminal and/or applicable to a first feature set. The second-type terminal is a reduced capability terminal. The first feature set includes one or more of the following features: small data transmission SDT, network slicing, or message 3 retransmission.

For implementation of the first-type terminal, the second-type terminal, and a third-type terminal, refer to related descriptions in the method provided in FIG. 4. Details are not described herein again.

That the random access resource is applicable to the second-type terminal means that the random access resource is applicable to a terminal device having a feature of the second-type terminal. In other words, the random access resource is applicable to a reduced capability terminal. In other words, the second-type terminal may perform random access by using the random access resource. Similarly, a random access resource applicable to the first-type terminal in the following means that the random access resource is applicable to a terminal device having a feature of the first-type terminal. In other words, the random access resource is applicable to a reduced capability terminal. In other words, the first-type terminal may perform random access by using the random access resource.

That the second random access resource includes a first-type random access resource applicable to a second-type terminal and/or applicable to a first feature set include: The second random access resource includes a first-type random access resource applicable to the second-type terminal; the second random access resource includes a first-type random access resource applicable to the first feature set; or the second random access resource includes a first-type random access resource applicable to the second-type terminal and/or applicable to the first feature set.

It may be understood that, when the terminal device supports random access, the second random access resource includes the first-type random access resource applicable to the second-type terminal.

In a possible design solution, the first-type terminal may include a first-type terminal supporting a first-type capability or a first-type terminal supporting a second-type capability. A maximum transmission rate of the first-type terminal supporting the first-type capability is less than a transmission rate of the second-type terminal, the maximum transmission rate of the first-type terminal supporting the first-type capability is determined based on a first parameter, and a baseband bandwidth of a data transmission channel of the first-type terminal supporting the first-type capability is less than a baseband bandwidth of a data transmission channel of the second-type terminal. A maximum transmission rate of the first-type terminal supporting the second-type capability is less than the transmission rate of the second-type terminal, and the maximum transmission rate of the first-type terminal supporting the first-type capability is determined based on a second parameter. The first parameter includes one or more of the following: a quantity of transport layers, a scaling factor, a modulation order, and a first threshold. The second parameter includes one or more of the following: a quantity of transport layers, a scaling factor, a modulation order, and a second threshold. The terminal reports some first parameters and the network delivers some parameters, so that the network determines a rate of the terminal.

For a specific implementation principle of the first-type terminal supporting the first-type capability or the first-type terminal supporting the second-type capability, refer to related descriptions in the protocol release 3GPP TS 38.306. Details are not described herein again.

For example, the first threshold may be 3 or 3.2, and the second threshold may be 0.8. The maximum transmission rate of the first-type terminal supporting the first-type capability may be 10 Mbps megabits per second (Million bits per second, Mbps), and the maximum transmission rate of the first-type terminal supporting the second-type capability may be 10 Mbps.

The transmission rate of the second-type terminal may be any possible transmission rate in the transmission rate i of the second-type terminal where i is a positive integer.

The network slicing feature may be a dedicated network slice access stratum group (network slice access stratum group, NSAG).

In a possible design solution, S701 may include: When no second-type random access resource applicable to the first-type terminal and applicable to the first feature set is configured for the terminal device, the terminal device determines the second random access resource from the first-type random access resource.

For example, the terminal device may determine a part of or the entire first-type random access resource as the second random access resource.

The terminal device may determine the second random access resource from the first-type random access resource based on fifth indication information. The fifth indication information may be from the network device. The fifth indication information may be carried in an SIB1 and/or other information.

For example, in the fifth indication information, there is one piece of sub information corresponding to each feature of the first-type capability terminal, the second-type capability terminal, and the first feature set, and the sub information indicates whether a configured random access resource is applicable to the feature. For example, if the random access resource is applicable to a feature, sub information corresponding to the feature is "true", that is, "true". If the random access resource is not applicable to a feature, sub information corresponding to the feature is "false", that is, "false". For example, if the second-type random access resource is applicable to the second-type terminal and SDT triggered by the first-type terminal, and the second-type random access resource is not applicable to network slicing and message 3 retransmission, a relationship between a feature provided in this embodiment of this application and whether the second-type random access resource is applicable to the feature is shown in the following Table 1. In addition, the fifth indication information may further include sub information corresponding to the second-type terminal. If the sub information corresponding to the second-type terminal, sub information corresponding to the first-type terminal, and sub information corresponding to SDT are all "true", the second-type random access resource may be applicable to an SDT procedure triggered by the first-type terminal and the second-type terminal. For the first-type terminal, if the sub information corresponding to the first-type terminal in the fifth indication information is set to "true", the sub information corresponding to the SDT feature is set to "true", and the sub information corresponding to the second-type terminal is set to "true", the first-type terminal may select the random access resource to trigger the SDT procedure. That is, the protocol specifies that if sub information corresponding to a feature indicating "true" is received, a terminal that does not support the feature cannot perform access. If "true" is indicated for two types of terminals configured with the feature, a terminal device can use the resource (which may also be referred to as a random access resource) for access as long as a terminal type of the terminal device is one of the two types, or considers that the resource is available.

**Table 1**

| Feature | Second-type terminal | SDT | Network slicing | Message 3 retransmission | First-type terminal |
|---|---|---|---|---|---|
| Whether a random access resource is applicable | True (true) | True (true) | False (false) | False (false) | True (true) |

For example, the fifth indication information may be carried in a feature combination (FeatureCombination) field of the SIB1. Alternatively, the fifth indication information may be carried in a separate field in the SIB1. Alternatively, the fifth indication information may be carried in other information.

In embodiments of this application, a feature may be understood as a feature or a function, and a feature set may also be understood as a feature combination, a characteristic combination, or a function combination.

S702: The terminal device sends a message 1 to the network device on the second random access resource. Correspondingly, the network device receives the message 1 from the terminal device on the second random access resource.

The message 1 is used by the terminal device for random access to the network device.

In addition, the message 1 may be further used to trigger a corresponding feature in the first feature set, that is, a function.

In a possible design solution, receiving, by the network device, the message 1 from the terminal device on the second random access resource may include: When no second-type random access resource used for the first-type terminal and applicable to the first feature set is configured for the terminal device, the network device receives the message 1 from the terminal device on the first-type random access resource.

In a possible design solution, the method provided in FIG. 7 may further include S701a.

S701a: The network device sends first information to the terminal device. Correspondingly, the terminal device receives the first information from the network device.

The first information indicates that the first-type random access resource is applicable to the first-type terminal and a feature corresponding to the first feature set, for example, an SDT procedure triggered by the first-type terminal.

In this way, the terminal device can determine the second random access resource based on an indication of the network device, reducing conflicts.

Optionally, the first information may be carried in a feature combination field. In this way, no new field is added, and resource overheads can be reduced.

Optionally, the method provided in FIG. 7 may further include S701b.

S701b: The network device sends second information to the terminal device. Correspondingly, the terminal device receives the second information from the network device.

The second information indicates that the first-type random access resource is applicable to the first-type terminal supporting the first-type capability and a feature corresponding to, for example, an SDT procedure triggered by, the first-type terminal supporting the first-type capability.

It may be understood that the first information and the second information may be sent together, or may be sent separately.

In this way, a scenario to which the first-type random access resource is applicable may be indicated, so that the first-type random access resource is used more flexibly.

A sequence of the foregoing steps does not limit an execution sequence of the steps, as long as the sequence is logical. For example, S701a may be performed before or after S701b, or S701a may be performed in parallel with S701b.

In this embodiment of this application, the first-type random access resource and the second-type random access resource in this embodiment may be applicable to a resource used to transmit a random access preamble in 2-step random access, or may be applicable to a random access resource in 4-step random access. In other words, the random access resource in the 2-step random access or the random access resource in the 4-step random access may be used by the terminal to trigger a corresponding feature through random access. That is, the random access resource may be reused. In addition, a feature of the 2-step random access and a feature of the 4-step random access may be reused.

It may be understood that another step of the random access procedure may be further performed in the method provided in FIG. 7.

As shown in (a) in FIG. 7, in contention-based random access, the method provided in FIG. 7 may further include S703a to S705a. For implementation principles of S703a to S705a, refer to related descriptions in S102 to S104. Details are not described herein again. A difference lies in that when the message 1 is used to trigger an SDT procedure, the message 2 in S703a may further indicate a data transmission resource used to transmit data, and the message 3 in S704a may further include to-be-transmitted data.

As shown in (b) in FIG. 7, in non-contention-based random access, the method provided in FIG. 7 may further include S703b and S704b. For implementation principles of S703b and S704b, refer to related descriptions in S203 and S204. Details are not described herein again. A difference lies in that when the message 1 is used to trigger an SDT procedure, the message 2 in S703b may further indicate a data transmission resource used to transmit data, and the message 3 in S704b may further include to-be-transmitted data. It may be understood that, in this embodiment of this application, if the second-type random access resource used for the first-type terminal and applicable to the first feature set is configured for the terminal device, that a terminal device determines a second random access resource in S701 may include: The terminal device determines the second-type random access resource as the second random access resource.

It may be understood that the message 3 may further include capability information of the terminal device.

The terminal device may select a resource from the random access resource of the reduced capability terminal device, and send the message 1 on the selected resource, to perform random access. In this way, when no random access resource of the first-type terminal is configured, the random access resource of the second-type terminal or the random access resource of the third-type terminal may be used to send the message 1, to implement random access of the first-type terminal.

In addition, the method provided in FIG. 7 may further include the following steps.

Step 7-1: The network device sends third information. Correspondingly, an AMF network element receives the third information.

The third information indicates a capability of the terminal device. For example, the third information may carry the capability information of the terminal device, to indicate the capability of the terminal device. Alternatively, the third information may indicate the capability of the terminal device by using a field, or the third information may indicate the capability of the terminal device by using one or more bits, for example, by using a bitmap. The third information may alternatively be referred to as capability information. The third information may be carried in the message 3, or may be carried in other information. Details are not described herein again.

Step 7-2: The AMF network element sends a paging message for a terminal device. Correspondingly, the network device receives the paging message for a terminal device.

The paging message carries fourth information for a terminal device, and the fourth information may indicate a capability of the terminal device.

For an implementation principle of the fourth information, refer to related descriptions of the third information. Details are not described herein again.

Step 7-3: The network device determines a paging policy based on the fourth information received from the AMF network element.

For example, the network device determines, based on the fourth information received from the AMF network element, whether to perform paging.

For example, if the capability of the terminal device carried in the paging message matches, for example, is the same as, a capability of a terminal device that is allowed to access the network device, the network device sends the paging message to the terminal device.

For example, if a terminal device with the first-type capability is allowed to access the network device, when a terminal device is a first-type terminal with the first-type capability, the terminal device is allowed to access the network device, and the network device sends the paging message to the terminal device.

It should be noted that if the capability of the terminal device carried in the paging message does not match, for example, is different from, a capability of a terminal device that is allowed to access the network device, the network device may not send the paging message.

For example, if a terminal device with the first-type capability is allowed to access the network device, when a terminal device is a first-type terminal with the second-type capability, the terminal device is not allowed to access the network device.

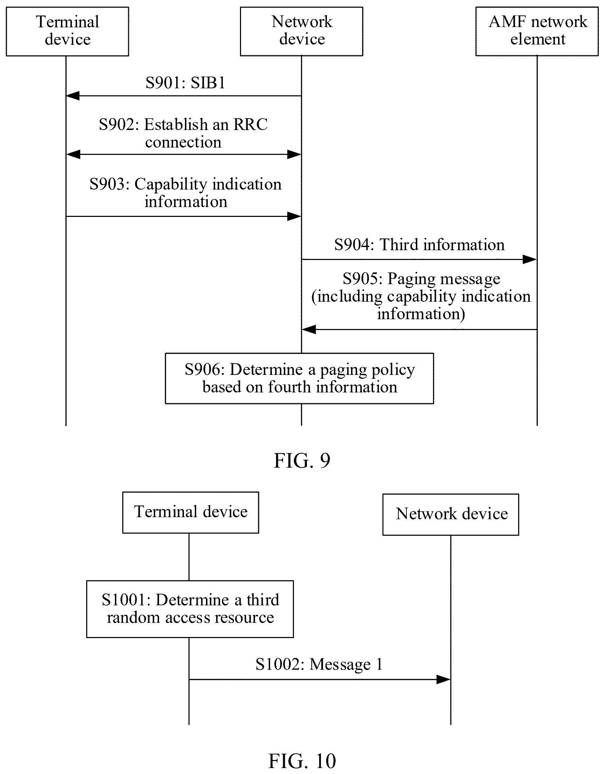

For technical effects of Step 7-1 to Step 7-3, refer to the following technical effects related to FIG. 9. Details are not described herein again.

It may be understood that, before S701, the method provided in FIG. 7 may further include Step 7-4.

In some other embodiments, to implement management of different types of terminals by the network device, access control needs to be performed on the terminal devices.

FIG. 8 is a schematic flowchart 1 of an access control method according to an embodiment of this application. As shown in FIG. 8, the access control method provided in this embodiment of this application may include S801 to S802.

S801: A network device sends third indication information to a terminal device. Correspondingly, the terminal device receives the third indication information from the network device.

For an implementation principle of the third indication information, refer to related descriptions of the third indication information in Step 4. For an implementation principle of S801, refer to related descriptions in Step 4. Details are not described herein again.

S802: The terminal device determines, based on the third indication information and capability information of the terminal device, whether to camp on a cell corresponding to the network device.

The capability information of the terminal device may indicate a quantity of receive antennas supported by the terminal device and a duplex mode supported by the terminal device.

The cell corresponding to the network device is a cell, of the network device, that can provide a service for the terminal device.

For an implementation principle of S802, refer to related descriptions in Step 5. Details are not described herein again.

In a possible design solution, the method provided in FIG. 8 may further include: The network device generates the third indication information.

Optionally, that the network device generates the third indication information may include: The network device generates the third indication information based on configuration information of the network device.

The configuration information of the network device may include a duplex mode supported by the network device, and/or a transmit/receive mode of a first-type terminal that is barred from accessing the network device.

For an implementation principle of the duplex mode supported by the network device and the transmit/receive mode of the first-type terminal barred from accessing the network device, refer to related descriptions of the fourth indication information. Details are not described herein again.

If the configuration information of the network device includes a transmit/receive mode barred by the network device, the third indication information includes the transmit/receive mode of the first-type terminal that is barred from accessing the network device.

If the configuration information of the network device includes the duplex mode supported by the network device, the third indication information includes the duplex mode supported by the network device.

If the configuration information of the network device includes the transmit/receive mode barred by the network device and the duplex mode supported by the network device, the third indication information includes a transmit/receive mode of an enhanced reduced capability terminal device that is barred from accessing the network device and the duplex mode supported by the network device.

It may be understood that the third indication information may alternatively be received by the network device from another network device.

According to the method provided in FIG. 8, the network device may send the third indication information to the terminal device, to indicate one or more of the following: a transmit/receive mode of a terminal device that is barred from accessing the network device, and/or a duplex mode supported by the network device. After receiving the third indication information, the terminal device may determine, based on the third indication information, whether to camp on the cell corresponding to the network device. In this way, when the capability information of the terminal device does not match the third indication information, the terminal device can avoid camping on the cell corresponding to the network device, and when the capability information of the terminal device matches the third indication information, the terminal device can camp on the cell corresponding to the network device, implementing access control over the terminal device.

To implement management of first-type terminals with different capabilities by the network device, for example, when the network device is overloaded, access control needs to be performed on the terminal devices. When the first-type terminal includes a first-type terminal supporting a first-type capability and a first-type terminal supporting a second-type capability, the network device may perform access control on first-type terminals with different capabilities. Descriptions are made below with reference to FIG. 9.

FIG. 9 is a schematic flowchart 2 of an access control method according to an embodiment of this application. As shown in FIG. 9, the access control method provided in this embodiment of this application may include S901 to S906.

S901: A network device sends barring indication information to a terminal device. Correspondingly, the terminal device receives the barring indication information from the network device.

In some possible design solutions, the terminal device may be a first-type terminal, and the first-type terminal may include a first-type terminal supporting a first-type capability or a first-type terminal supporting a second-type capability. For implementation of the first-type terminal supporting the first-type capability or the first-type terminal supporting the second-type capability, refer to related descriptions of the first terminal in FIG. 7. Details are not described herein again. It may be understood that the first-type terminal may also be a terminal supporting another capability. The first-type terminal supporting the first-type capability or the first-type terminal supporting the second-type capability is merely used as an example.

The barring indication information indicates that the network device has enabled a function of performing access control based on a capability type supported by a terminal device.

For example, the barring indication information may be carried in an SIB1. It may be understood that the barring indication information may alternatively be carried in other information or signaling, and the SIB1 herein is merely used as an example.

S902: The terminal device establishes an RRC connection to the network device.

For an implementation principle of S902, refer to a conventional technology. Details are not described herein again.

S903: The terminal device sends capability indication information of the terminal device to the network device. Correspondingly, the network device receives the capability indication information from the terminal device.

The capability indication information indicates a capability of the terminal device. For content indicated by the capability indication information, refer to content indicated by the third information in FIG. 7. Details are not described herein again.

It should be noted that S901 and S903 are both optional steps.

S904: The network device sends third information. Correspondingly, an AMF network element receives the third information.

The third information indicates the capability of the terminal device. For an implementation principle of the third information, refer to related descriptions in the method provided in FIG. 7. Details are not described herein again.

For related descriptions of S904, refer to related descriptions of Step 7-2. Details are not described herein again.

It may be understood that S904 may be determined based on S901 and S902, or may be received from another device such as a network device. Details are not described herein again.

S905: The AMF network element sends a paging message for a terminal device. Correspondingly, the network device receives the paging message for a terminal device.

The paging message carries fourth information for the terminal device, and the fourth information may indicate a capability of the terminal device.

For an implementation principle of the fourth information, refer to related descriptions in the method provided in FIG. 7. For related descriptions of S905, refer to related descriptions of Step 7-2. Details are not described herein again. Details are not described herein.

S906: The network device determines a paging policy based on the fourth information received from the AMF network element.

For related descriptions of S906, refer to related descriptions of Step 7-3. Details are not described herein again.

According to the method provided in FIG. 9, the network device may determine, based on the capability indication information carried in the paging message, whether to send the paging message to the terminal device. In this way, when the capability information of the terminal device does not match the barring indication information, the terminal device can be prevented from accessing the network device, implementing access control over the terminal device.

It may be understood that the scenario to which FIG. 9 is applicable may further include another scenario. The scenario in which the network device is overloaded is merely used as an example, and details are not described herein again.

In some possible implementations, when a random access resource applicable to the first-type terminal exists, the terminal device selects the random access resource applicable to the first-type terminal as a resource for random access. Descriptions are made below with reference to FIG. 10. As shown in FIG. 10, the communication method includes the following steps.

S1001: A terminal device determines a third random access resource.

The terminal device is an enhanced reduced capability first-type terminal, and when a random access resource set configured by a network device includes a random access resource applicable to the first-type terminal, the third random access resource is a random access resource applicable to the first-type terminal in the random access resource set.

The random access resource set may include at least one random access resource configured by the network device.

In a possible design solution, when the random access resource set further includes a random access resource applicable to at least one feature in a first feature set, the third random access resource is a random access resource, in the random access resource set, that is applicable to the first-type terminal and a feature used to trigger the terminal device to perform random access, a feature used to trigger the terminal device to perform random access is a feature in the first feature set, and the first feature set includes one or more of the following features: small data transmission SDT, network slicing, or message 3 retransmission.

In a possible design solution, when the random access resource set includes a random access resource applicable to a second-type terminal and does not include a random access resource applicable to the first-type terminal, the third random access resource is the random access resource applicable to the second-type terminal in the random access resource set.

Optionally, when the random access resource set further includes a random access resource applicable to at least one feature in a first feature set, the third random access resource is a random access resource, in the random access resource set, that is applicable to the first-type terminal by the network device and a feature used to trigger the terminal device to perform random access. A feature used to trigger the terminal device to perform random access is a feature in the first feature set, and the first feature set includes one or more of the following features: small data transmission SDT, network slicing, or message 3 retransmission.

In a possible design solution, the terminal device selects the third random access resource from the random access resource set based on the feature used to trigger the terminal device to perform random access.

It is assumed that the random access resource set includes a random access resource 1 to a random access resource 4. Features to which the random access resource 1 to the random access resource 4 configured by the network device are applicable are shown in Table 2. In this case, the third random access resource is the random access resource 1 or the random access resource 2.

**Table 2**

| Random access resource | Second-type terminal | First-type terminal | SDT | Network slicing | Message 3 retransmission |
|---|---|---|---|---|---|
| Random access resource 1 | | True | True | | True |
| Random access resource 2 | | True | | True | |
| Random access resource 3 | True | | True | True | |
| Random access resource 4 | True | | True | True | True |

The following describes the third random access resource with reference to different cases.

Case 4.1: The third random access resource is a random access resource, in the random access resource set, whose applicable feature includes all first-type features used to trigger the terminal device to perform random access.

The first-type feature is a resource other than random access resources of a feature of the enhanced reduced capability first-type terminal and a feature of a reduced capability second-type terminal.

All the first-type features used to trigger the terminal device to perform random access are a second feature set. The random access resources configured in Table 2 are used as an example. It is assumed that the terminal device supports the SDT feature and the message 3 retransmission feature. Because the feature to which the random access resource 1 is applicable includes the SDT feature and the message 3 retransmission feature, the random access resource 1 is the third random access resource.

Case 4.2: Apart of features of the second feature set are all first-type features applicable to the third random access resource. In other words, the feature applicable to the third random access resource is a part of features of the second feature set, that is, the feature applicable to the third random access resource is a subset of a set formed by the second feature set.

In this case, the third random access resource is a random access resource whose applicable feature is a part of features of the second feature set and that is applicable to a first feature. The first feature is a feature with a highest priority among all first-type features applicable to all random access resources whose applicable feature is a part of features of the second feature set. That is, if a random access resource is a subset of the second feature set, the random access resource may be selected as the third random access resource.

S1001 may include: When the random access resource set includes a random access resource applicable to the first-type terminal and includes a random access resource whose applicable feature includes all the features of the second feature set, the terminal device determines the random access resource, in the random access resource set, whose applicable feature includes the second feature set as the third random access resource.

When the random access resource set includes a random access resource applicable to the first-type terminal and does not include a random access resource whose applicable feature includes all the features of the second feature set, the terminal device determines, as the third random access resource, a random access resource applicable to the first-type terminal and applicable to a part of features of the second feature set and the first feature.

The following uses the random access resources in Table 2 as an example. For example, if features used to trigger the terminal device to perform random access include the SDT feature and the network slicing feature, because the random access resource 1 includes message 3 retransmission (not a feature used to trigger the terminal device to perform random access), the third random access resource is the random access resource 2.

If features used to trigger the terminal device to perform random access include SDT, message 3 retransmission, and network slicing, assuming that a priority of the SDT feature is higher than a priority of the network slicing feature, when resources configured by the network device are shown in Table 2, the third random access resource is the random access resource 1.

In other words, the terminal device may select a random access resource by using a backoff mechanism, and when a random access resource applicable to the first-type terminal exists, the random access resource applicable to the first-type terminal is selected as the third random access resource. When no random access resource applicable to the first-type terminal exists and a random access resource applicable to the second-type terminal exists, the random access resource applicable to the second-type terminal is selected as the third random access resource.

It may be understood that, in this embodiment of this application, that a random access resource is applicable to a feature means that when configuring the random access resource, the network device sets the feature to "true" (true) in a feature combination (featureCombination) field, that is, indicates that a feature associated with a configured random access preamble (preamble) is the feature. It may be understood that, in this embodiment of this application, the feature used by the random access resource may be explicitly indicated by the network device, for example, in a manner similar to the fifth indication information in FIG. 7. Details are not described herein again. Message 3 retransmission may alternatively be referred to as message 3 repetition.

In addition, a priority of a feature on the terminal device may be configured by the network device (for example, configured by using a system message) or predefined according to a protocol.

S1002: The terminal device sends a message 1 to the network device on the third random access resource. Correspondingly, the network device receives the message 1 from the terminal device on the third random access resource. In this way, when a random access resource applicable to all the features of the second feature set exists, the random access resource applicable to all the features of the second feature set is selected for random access, better ensuring a communication requirement. When no random access resource applicable to all the features of the second feature set exists, a random access resource whose applicable feature set is a feature set of the second feature set and that meets the first feature set is preferentially selected for random access, better meeting a communication requirement.

For an implementation principle of S1002, refer to related descriptions of S702. Details are not described herein again.

According to the method provided in FIG. 10, when a random access resource applicable to the first-type terminal exists, the terminal device may select the random access resource applicable to the first-type terminal, to perform random access.

It may be understood that when no random access resource applicable to the first-type terminal exists in random access resources configured by the network device, and a random access resource applicable to the second-type terminal exists, the third random access resource is a random access resource applicable to the second-type terminal in the random access resources configured by the network device.

Case 4.3: The third random access resource is a random access resource, in the random access resource set, whose applicable feature includes all first-type features used to trigger the terminal device to perform random access. The random access resources configured in Table 2 are used as an example. It is assumed that the terminal device supports SDT and message 3 retransmission. Because the feature to which the random access resource 1 is applicable includes SDT and message 3 retransmission, the random access resource 1 is the third random access resource.

Case 4.4: All first-type features used to trigger the terminal to perform random access include a feature applicable to the third random access resource. Alternatively, the feature applicable to the third random access resource is a part of all the first-type features used to trigger the terminal to perform random access, that is, the feature applicable to the third random access resource is a subset of a set formed by all the first-type features used to trigger the terminal to perform random access.

That is, the third random access resource is a random access resource whose applicable feature is a part of features of the second feature set and that is applicable to a first feature. The first feature is a feature with a highest priority among all first-type features applicable to all random access resources whose applicable features are the part of features of the first feature set.

When the random access resource set includes a random access resource applicable to the second-type terminal, if the random access resource set includes a random access resource whose applicable feature is all the features of the second feature set, the terminal device may determine the random access resource, in the random access resource set, whose applicable feature includes all the features of the second feature set as the third random access resource. That is, if a random access resource in the random access resource set is able to indicate all the features of the second feature set, the random access resource that is able to indicate all the features of the second feature set may be used as the third random access resource.

If the random access resource set does not include a random access resource whose applicable feature is all the features of the second feature set, the terminal device may determine a random access resource that is applicable to the second-type terminal and a part of features of the second feature set and that is applicable to the first feature as the third random access resource.

With reference to the example of random access resources in Table 3, it is assumed that random access resources configured on the network side include a random access resource 6 to a random access resource 8. Features to which the resource 6 to the resource 8 configured by the network device are applicable are shown in Table 3. If features used to trigger the terminal device to perform random access includes SDT and message 3 retransmission, the third random access resource is the random access resource 8.

**Table 3**

| Random access resource | Second-type terminal | First-type terminal | SDT | Network slicing | Message 3 retransmission |
|---|---|---|---|---|---|
| Random access resource 6 | True | | True | True | |
| Random access resource 7 | True | | True | True | True |
| Random access resource 8 | True | | True | | |

In some possible embodiments, the terminal device may support the random access resource applicable to the first-type terminal and the random access resource applicable to the second-type terminal.

In this embodiment of this application, for implementation principles of the first-type terminal and the second-type terminal, refer to related descriptions in FIG. 4. For an implementation principle of information in the second feature set, refer to related descriptions of corresponding information in the first feature set in FIG. 7. Details are not described herein again.

In addition, in this embodiment of this application, the terminal device may further indicate, by using separate information, whether the random access resource applicable to the second-type terminal can be used for random access of the first-type terminal, and/or indicate whether the random access resource applicable to the second feature set can be used for random access of the first-type terminal.

In addition, it may be understood that in this embodiment of this application, the random access resource set may further include a random access resource applicable to a third-type terminal, for example, an NR terminal or an enhanced mobile bandwidth (enhanced mobile broadband, eMBB) terminal. When the random access resource does not include the random access resource applicable to the first-type terminal or the second-type terminal, the terminal device may select the third random access resource from the random access resource applicable to the third-type terminal. For implementation of the third-type terminal, refer to related descriptions in FIG.

### 4. Details are not described herein again.

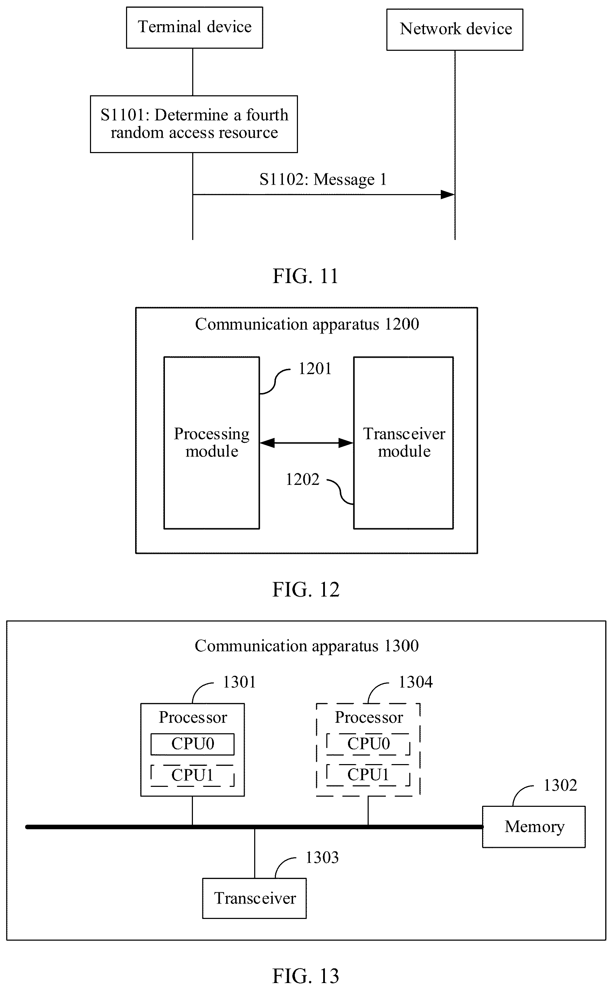

In some possible embodiments, the terminal device may select the random access resource with reference to the second feature set and the resource used for random access. Descriptions are made below with reference to FIG. 11. As shown in FIG. 11, the communication method includes the following steps.

S1101: A terminal device determines a fourth random access resource.

The fourth random access resource is a random access resource that is in a random access resource set configured by a network device and that is applicable to a second feature set, and the second feature set is a set of features used to trigger the terminal device to perform random access.

Alternatively,
the fourth random access resource is a random access resource applicable to a part of features of the second feature set and applicable to a first feature, and/or the fourth random access resource is a random access resource applicable to a second feature in the random access resource set.

The second feature is a feature of an enhanced reduced capability first-type terminal applicable to a random access resource in the random access resource set, a feature of a reduced capability second-type terminal, or a feature with a higher priority between a feature of an enhanced reduced capability first-type terminal and a feature of a reduced capability second-type terminal.

For example, if the feature applicable to all the random access resources in the random access resource set is the feature of the enhanced reduced capability first-type terminal, the second feature is the feature of the enhanced reduced capability first-type terminal. If the feature applicable to all the random access resources in the random access resource set is the feature of the reduced capability second-type terminal, the second feature is the feature of the reduced capability second-type terminal. If the random access resource set includes a random access resource applicable to the feature of the enhanced reduced capability first-type terminal and includes a random access resource applicable to the feature of the reduced capability second-type terminal, the second feature is the feature with the higher priority between the feature of the enhanced reduced capability first-type terminal and the feature of the reduced capability second-type terminal.

The priority of the enhanced reduced capability first-type terminal may be the same as or different from the priority of the reduced capability second-type terminal.

The second feature set may include one or more of the following features: small data transmission SDT, network slicing, or message 3 retransmission. It may be understood that the features included in the second feature set herein are merely used as an example. In actual implementation, another feature may be further included.

For an implementation principle of the first feature, refer to related descriptions in S1001.

In a possible design solution, the terminal device is the first-type terminal.

For ease of understanding, the fourth random access resource is described below by using examples with reference to specific cases.

Case 5: The priority of the feature of the enhanced reduced capability first-type terminal or the priority of the feature of the reduced capability second-type terminal is not considered.

Case 5.1: If the random access resource set includes a random access resource applicable to the second feature set, the random access resource applicable to the second feature set is the fourth random access resource. In other words, S1101 includes: The terminal device determines, as the fourth random access resource, a random access resource applicable to the second feature set and any one of the following: the feature of the enhanced reduced capability first-type terminal or the feature of the reduced capability second-type terminal.

It may be understood that, in this case, the fourth random access resource is applicable to the second feature set, and is further applicable to the feature of the enhanced reduced capability first-type terminal or the feature of the reduced capability second-type terminal.

That a random access resource is applicable to the second-type terminal may alternatively described as that the random access resource is applicable to the feature of the reduced capability second-type terminal. That a random access resource is applicable to the first-type terminal may alternatively described as that the random access resource is applicable to the feature of the enhanced reduced capability first-type terminal.

It is assumed that the random access resource set includes a random access resource 9 to a random access resource 11, and features applicable to the random access resources are shown in Table 4. If the second feature set corresponding to the terminal device includes SDT, the fourth random access resource is the resource 11.

**Table 4**

| Random access resource | Second-type terminal | First-type terminal | SDT | Network slicing | Message 3 retransmission |
|---|---|---|---|---|---|
| Random access resource 9 | | True | | | True |
| Random access resource 10 | | True | | True | |
| Random access resource 11 | True | | True | | |
| Random access resource 12 | True | | True | | True |
| Random access resource 13 | True | | | | True |

Case 5.2: No random access resource in the random access resource set is applicable to all features of the second feature set.

If there is one random access resource whose applicable feature is a subset of the second feature set, the random access resource is the fourth random access resource.

If there are multiple random access resources whose applicable features are a subset of the second feature set, the fourth random access resource is determined according to a priority of a feature in the second feature set.

The fourth random access resource is a random access resource whose applicable feature is a part of features of the second feature set and applicable to a first feature. The first feature is a feature with a highest priority among all first-type features applicable to all random access resources whose applicable features are the part of features of the second feature set.

For example, it is assumed that features applicable to random access resources in the random access resource set are shown in Table 4. If features supported by the terminal device include the SDT feature and the network slicing feature, and the priority of the SDT feature is higher than the priority of the network slicing feature, the fourth random access resource is the resource 11.

In this case, S1101 may include: The terminal device determines a random access resource that is applicable to a part of features of the second feature set and that is applicable to the first feature as the fourth random access resource.

Further description is made below with reference to Table 4. It is assumed that the priority of the SDT feature is higher than the priority of network slicing and the priority of message 3 retransmission, and the priority of network slicing is higher than the priority of message 3 retransmission. The second feature set of the terminal device includes SDT, network slicing, and message 3 retransmission. In this case, the terminal device first determines that all of the random access resource 9 to the random access resource 13 can be selected, but the priority of SDT is the highest. Therefore, the terminal device may further determine that the random access resource selected by the terminal device is one of the random access resource 11 and the random access resource 12.

In this case, because the random access resource 12 is further applicable to message 3 retransmission, the fourth random access resource determined by the terminal device is the random access resource 12. Case 6: The priority of the feature of the enhanced reduced capability first-type terminal or the priority of the feature of the reduced capability second-type terminal is considered.

Case 6.1: The feature to which the fourth random access resource is applicable is the feature of the enhanced reduced capability first-type terminal or the feature of the reduced capability second-type terminal. In this case, the fourth random access resource is a random access resource applicable to the second feature in the random access resource set.

In other words, S1101 may include: If the random access resource set includes a random access resource applicable to the feature of the enhanced reduced capability first-type terminal and a random access resource applicable to the feature of the reduced capability second-type terminal, the terminal device may determine the random access resource applicable to the second feature in the random access resource set as the random access resource. The following uses Table 4 as an example. For example, assuming that the priority of the feature of the second-type terminal is higher than the priority of the feature of the first-type terminal, the fourth random access resource is the random access resource 9 or the random access resource 10.

Case 6.2: The feature to which the fourth random access resource is applicable includes the feature of the enhanced reduced capability first-type terminal or the feature of the reduced capability second-type terminal, and a feature in the second feature set.

In other words, S1101 may include: The terminal device may determine a random access resource, in the random access resource set, whose applicable first-type features are a part of features of the second feature set, and that is applicable to the second feature and the first feature as the fourth random access resource.

If message 3 retransmission triggers random access, and if the priority of the feature of the reduced capability second-type terminal is higher than the priority of the feature of the enhanced reduced capability first-type terminal, the resource 13 that includes the feature of the enhanced reduced capability first-type terminal and message 3 retransmission is selected.

It may be understood that, in this embodiment of this application, that a random access resource is applicable to a feature means that when configuring the random access resource, the network device sets the feature to "true" (true) in a feature combination (featureCombination) field, that is, indicates that a feature associated with a configured random access preamble (preamble) is the feature. It may be understood that, in this embodiment of this application, the feature used by the random access resource may be explicitly indicated by the network device, for example, in a manner similar to the fifth indication information in FIG. 7. Details are not described herein again. Message 3 retransmission may alternatively be referred to as message 3 repetition.

In addition, a priority of a feature on the terminal device may be configured by the network device (for example, configured by using a system message) or predefined according to a protocol.

S1102: The terminal device sends a message 1 to the network device on the fourth random access resource. Correspondingly, the network device receives the message 1 from the terminal device on the fourth random access resource.

For an implementation principle of S1102, refer to related descriptions of S702. Details are not described herein again.

According to the method provided in FIG. 11, in the communication method, the terminal device may determine the fourth random access resource, and send the message 1 based on the fourth random access resource. In this way, a random access resource applicable to the entire second feature set or applicable to a feature with a high feature priority may be selected for random access.

In this embodiment of this application, for implementation principles of the first-type terminal and the second-type terminal, refer to related descriptions in FIG. 4. For an implementation principle of information in the second feature set, refer to related descriptions of corresponding information in the first feature set in FIG. 7. Details are not described herein again.

It may be understood that the random access resource in FIG. 10 or FIG. 11 is a random access resource in the random access resource set unless otherwise specified.

The methods provided in embodiments of this application are described above in detail with reference to FIG. 3 to FIG. 11. The following describes in detail communication apparatuses configured to perform the methods provided in embodiments of this application with reference to FIG. 12 and FIG. 13.

For example, FIG. 12 is a diagram 1 of a structure of a communication apparatus according to an embodiment of this application. As shown in FIG. 12, the communication apparatus 1200 includes a processing module 1201 and a transceiver module 1202. For ease of descriptions, FIG. 12 shows only main components of the communication apparatus.

In some embodiment, the communication apparatus 1200 may be used in the communication system shown in FIG. 3, and perform a function of the terminal device in the method shown in FIG. 4.

The processing module 1201 is configured to determine a first random access resource.

The communication apparatus 1200 is an enhanced reduced capability first-type terminal, and the first random access resource includes a random access resource of a second-type terminal or a random access resource of a third-type terminal. The second-type terminal is a reduced capability terminal, the third-type terminal is a non-reduced capability terminal, the random access resource of the second-type terminal is used by the second-type terminal for random access to a network device, and the random access resource of the third-type terminal is used by the third-type terminal for random access to the network device.

The transceiver module 1202 is configured to send a message 1 to the network device on the first random access resource. The message 1 is used by the communication apparatus 1200 for random access to the network device.

In a possible design solution, the processing module 1201 is configured to: when no random access resource of the first-type terminal is configured for the communication apparatus 1200, determine the first random access resource. The random access resource of the first-type terminal is used by the first-type terminal to access the network device.

In a possible design solution, the processing module 1201 is configured to: when the random access resource of the second-type terminal is configured for the communication apparatus 1200, determine the random access resource of the second-type terminal as the first random access resource.

Further, the transceiver module 1202 is further configured to receive a system message 1 from the network device. The system message 1 indicates the first random access resource.

In a possible design solution, the random access resource of the third-type terminal is configured for the communication apparatus 1200. The processing module 1201 is configured to: when no random access resource of the first-type terminal and no random access resource of the second-type terminal are configured for the communication apparatus 1200, determine the random access resource of the third-type terminal as the first random access resource.

In a possible design solution, the transceiver module 1202 is further configured to receive a message 2 from the network device. The message 2 is used to indicate a timing advance for sending information by the communication apparatus 1200 to the network device, a delay of sending a message 3 by the communication apparatus 1200, and a bandwidth occupied by the communication apparatus 1200 for sending the message 3. The delay of sending the message 3 by the communication apparatus 1200 is greater than a delay of sending the message 3 by the second-type terminal and a delay of sending the message 3 by the third-type terminal. The bandwidth occupied by the communication apparatus 1200 for sending the message 3 is less than a bandwidth occupied by the second-type terminal for sending the message 3 and a bandwidth occupied by the second-type terminal for sending the message 3.

Optionally, the transceiver module 1202 is further configured to send the message 3 based on the message 2. The message 3 further indicates that the communication apparatus 1200 is the first-type terminal.

In a possible design solution, the transceiver module 1202 is further configured to receive second indication information from the network device. The second indication information indicates that the first-type terminal is allowed to access the network device.

In a possible design solution, the transceiver module 1202 is further configured to receive third indication information from the network device. The third indication information indicates one or more of the following: a quantity of receive antennas of a first-type terminal that is barred from accessing the network device, or a duplex mode supported by the network device. The processing module 1201 is further configured to determine, based on the third indication information and capability information of the communication apparatus 1200, to camp on a cell corresponding to the network device.

Optionally, the processing module 1201 is specifically configured to: when the capability information of the communication apparatus 1200 includes a quantity of receive antennas of the communication apparatus 1200 and the quantity of receive antennas of the communication apparatus 1200 does not match the quantity of receive antennas indicated by the third indication information, control the communication apparatus 1200 to camp on the cell corresponding to the network device, and/or when the capability information of the communication apparatus 1200 includes a duplex mode of the communication apparatus 1200 and the duplex mode of the communication apparatus 1200 is the duplex mode supported by the network device, control the communication apparatus 1200 to camp on the cell corresponding to the network device.

Optionally, the quantity of receive antennas indicated by the third indication information includes one receive antenna and/or two receive antennas, and the duplex mode indicated by the third indication information includes half-duplex frequency division duplex.

Optionally, the third indication information includes first sub indication information. The first sub indication information indicates a quantity of receive antennas of a first-type terminal that is barred from accessing the network device, and the first sub indication information further indicates a quantity of receive antennas of a second-type terminal that is barred from accessing the network device. Alternatively, the third indication information includes second sub indication information. The second sub indication information indicates a quantity of receive antennas of a first-type terminal that is barred from accessing the network device.

Optionally, the third indication information includes third sub indication information. The third sub indication information indicates a duplex mode of a first-type terminal supported by the network device, and the third sub indication information further indicates a duplex mode of a second-type terminal supported by the network device.

Optionally, the transceiver module 1202 may include a receiving module and a sending module (not shown in FIG. 12). The transceiver module 1202 is configured to implement a sending function and a receiving function of the communication apparatus 1200.

Optionally, the communication apparatus 1200 may further include a storage module (not shown in FIG. 12). The storage module stores a program or instructions. When the processing module 1201 executes the program or the instructions, the communication apparatus 1200 is caused to perform a function of the terminal device in the communication method shown in any design solution of FIG. 4.

It should be understood that the processing module 1201 in the communication apparatus 1200 may be implemented by using a processor or a processor-related circuit component, and may be a processor or a processing unit. The transceiver module 1202 may be implemented by using a transceiver or a transceiver-related circuit component, and may be a transceiver or a transceiver unit.

It should be noted that the communication apparatus 1200 may be a terminal device, or may be a chip (system) or another part or component that may be disposed in the terminal device, or may be an apparatus including a network device. This is not limited in this application.

In addition, for technical effects of the communication apparatus 1200, refer to technical effects of the random access resource selection method shown in any design solution of FIG. 4. Details are not described herein again.

In some other embodiments, the communication apparatus 1200 may be used in the communication system shown in FIG. 3, and perform a function of the network device in the method shown in FIG. 4.

The processing module 1201 is configured to receive a message 1 from a terminal device on a first random access resource by using the transceiver module 1202.

The first random access resource includes a random access resource of a second-type terminal or a random access resource of a third-type terminal. The second-type terminal is a reduced capability terminal, the third-type terminal is a non-reduced capability terminal, the random access resource of the second-type terminal is used by the second-type terminal for random access to the communication apparatus 1200, the random access resource of the third-type terminal is used by the third-type terminal for random access to the communication apparatus 1200, and the message 1 is used by the terminal device for random access to the communication apparatus 1200.

The processing module 1201 is configured to send a message 2 to the terminal device based on the message 1 by using the transceiver module 1202, to perform random access. The message 2 indicates a timing advance for sending information by the terminal device to the communication apparatus 1200.

In a possible design solution, the transceiver module 1202 is configured to: when no random access resource of the first-type terminal is configured, receive the message 1 from the terminal device on the first random access resource. The random access resource of the first-type terminal is used by the first-type terminal to access the communication apparatus 1200.

In a possible design solution, the transceiver module 1202 is configured to: when the random access resource of the second-type terminal is configured for the terminal device, receive the message 1 from the terminal device on the random access resource of the second-type terminal.

In a possible design solution, the transceiver module 1202 is further configured to send a system message 1 to the terminal device. The system message 1 indicates the first random access resource.

In a possible design solution, the communication apparatus 1200 configures the random access resource of the third-type terminal for the terminal device. The transceiver module 1202 is further configured to: when no random access resource of the first-type terminal and no random access resource of the second-type terminal are configured for the terminal device, receive the message 1 from the terminal device on the random access resource of the third-type terminal.

In a possible design solution, the message 2 may further indicate a timing advance for sending information by the terminal device to the communication apparatus 1200, a delay of sending a message 3 by the terminal device, and a bandwidth of a resource occupied by the terminal device for sending the message 3. The delay of sending the message 3 by the terminal device is greater than a delay of sending the message 3 by the second-type terminal and a delay of sending the message 3 by the third-type terminal. The bandwidth occupied by the terminal device for sending the message 3 is less than a bandwidth occupied by the second-type terminal for sending the message 3 and a bandwidth occupied by the second-type terminal for sending the message 3.

Optionally, the transceiver module 1202 is further configured to receive the message 3 from the terminal device. The message 3 further indicates that the terminal device is the first-type terminal.

In a possible design solution, the transceiver module 1202 is further configured to send second indication information to the terminal device. The second indication information indicates that the first-type terminal is allowed to access the communication apparatus 1200.

In a possible design solution, the processing module 1201 is further configured to generate third indication information. The third indication information indicates one or more of the following: a quantity of receive antennas of a first-type terminal that is barred from accessing the communication apparatus 1200, or a duplex mode supported by the communication apparatus 1200. The transceiver module 1202 is further configured to send the third indication information to the terminal device.

Optionally, the quantity of receive antennas indicated by the third indication information includes one receive antenna and/or two receive antennas, and the duplex mode indicated by the third indication information includes half-duplex frequency division duplex.

Optionally, the third indication information includes first sub indication information. The first sub indication information indicates a quantity of receive antennas of a second-type terminal that is barred from accessing the communication apparatus 1200, and the first sub indication information further indicates a quantity of transmit/receive antennas of a second-type terminal that is barred from accessing the communication apparatus 1200. Alternatively, the third indication information includes second sub indication information. The second sub indication information indicates a quantity of receive antennas of a first-type terminal that is barred from accessing the communication apparatus 1200.

Optionally, the third indication information includes third sub indication information, the third sub indication information indicates a duplex mode of a first-type terminal supported by the communication apparatus 1200, and the third sub indication information further indicates a duplex mode of a second-type terminal supported by the communication apparatus 1200.

Optionally, the transceiver module 1202 may include a receiving module and a sending module (not shown in FIG. 12). The transceiver module 1202 is configured to implement a sending function and a receiving function of the communication apparatus 1200.

Optionally, the communication apparatus 1200 may further include a storage module (not shown in FIG. 12). The storage module stores a program or instructions. When the processing module 1201 executes the program or the instructions, the communication apparatus 1200 is caused to perform a function of the network device in the communication method shown in any design solution of FIG. 4.

It should be understood that the processing module 1201 in the communication apparatus 1200 may be implemented by using a processor or a processor-related circuit component, and may be a processor or a processing unit. The transceiver module 1202 may be implemented by using a transceiver or a transceiver-related circuit component, and may be a transceiver or a transceiver unit.

It should be noted that the communication apparatus 1200 may be a network device, may be a chip (system) or another part or component that may be disposed in the network device, or may be an apparatus including the network device. This is not limited in this application.

In addition, for technical effects of the communication apparatus 1200, refer to technical effects of the random access resource selection method shown in any design solution of FIG. 4. Details are not described herein again.

In some other embodiments, the communication apparatus 1200 may be used in the communication system shown in FIG. 3, and perform a function of the terminal device in the method shown in FIG. 9.

The transceiver module 1202 is configured to receive third indication information from the network device. The third indication information indicates one or more of the following: a quantity of receive antennas of a first-type terminal that is barred from accessing the network device, or a duplex mode supported by the network device. The first-type terminal is an enhanced reduced capability terminal.

The processing module 1201 is configured to determine, based on the third indication information and capability information of the communication apparatus 1200, whether to camp on a cell corresponding to the network device.

In a possible design solution, the processing module 1201 is specifically configured to: the capability information of the communication apparatus 1200 includes a quantity of receive antennas of the communication apparatus 1200. If the quantity of receive antennas of the communication apparatus 1200 does not match the quantity of receive antennas indicated by the third indication information, the communication apparatus 1200 camps on the cell corresponding to the network device, and/or the capability information of the communication apparatus 1200 includes a duplex mode of the communication apparatus 1200, and if the duplex mode of the communication apparatus 1200 is the duplex mode supported by the network device, the communication apparatus 1200 camps on the cell corresponding to the network device.

Optionally, the quantity of receive antennas indicated by the third indication information includes one receive antenna and/or two receive antennas, and the duplex mode indicated by the third indication information includes half-duplex frequency division duplex.

Optionally, the third indication information includes first sub indication information. The first sub indication information indicates a quantity of receive antennas of a first-type terminal that is barred from accessing the network device, and the first sub indication information further indicates a quantity of receive antennas of a second-type terminal that is barred from accessing the network device. In this way, the first sub indication information may be reused to indicate the quantity of receive antennas used by the first-type terminal to access the network device, reducing overheads. Alternatively, the third indication information may include second sub indication information. The second sub indication information indicates a quantity of receive antennas of a first-type terminal that is barred from accessing the network device.

Optionally, the third indication information includes third sub indication information. The third sub indication information indicates a duplex mode of a first-type terminal supported by the network device, and the third sub indication information further indicates a duplex mode of a second-type terminal supported by the network device.

In a possible design solution, the third indication information may be carried in an access control field of a system information block.

Optionally, the transceiver module 1202 may include a receiving module and a sending module (not shown in FIG. 12). The transceiver module 1202 is configured to implement a sending function and a receiving function of the communication apparatus 1200.

Optionally, the communication apparatus 1200 may further include a storage module (not shown in FIG. 12). The storage module stores a program or instructions. When the processing module 1201 executes the program or the instructions, the communication apparatus 1200 is caused to perform a function of the terminal device in the communication method shown in any design solution of FIG. 9.

It should be understood that the processing module 1201 in the communication apparatus 1200 may be implemented by using a processor or a processor-related circuit component, and may be a processor or a processing unit. The transceiver module 1202 may be implemented by using a transceiver or a transceiver-related circuit component, and may be a transceiver or a transceiver unit.

It should be noted that the communication apparatus 1200 may be a terminal device, or may be a chip (system) or another part or component that may be disposed in the terminal device, or may be an apparatus including a network device. This is not limited in this application.

In addition, for technical effects of the communication apparatus 1200, refer to technical effects of the access control method shown in any design solution of FIG. 9. Details are not described herein again.

In some other embodiments, the communication apparatus 1200 may be used in the communication system shown in FIG. 3, and perform a function of the network device in the method shown in FIG. 9.

The processing module 1201 is configured to generate third indication information.

The third indication information indicates one or more of the following: a quantity of receive antennas of an enhanced reduced capability terminal that is barred from accessing the communication apparatus 1200, or a duplex mode supported by the communication apparatus 1200. The first-type terminal is an enhanced reduced capability terminal.

The transceiver module 1202 is configured to send the third indication information to the terminal device.

Optionally, the quantity of receive antennas indicated by the third indication information includes one receive antenna and/or two receive antennas, and the duplex mode indicated by the third indication information includes half-duplex frequency division duplex.

Optionally, the third indication information includes first sub indication information. The first sub indication information indicates a quantity of receive antennas of a first-type terminal that is barred from accessing the network device, and the first sub indication information further indicates a quantity of receive antennas of a second-type terminal that is barred from accessing the network device. In this way, the first sub indication information may be reused to indicate the quantity of receive antennas used by the first-type terminal to access the network device, reducing overheads. Alternatively, the third indication information may include second sub indication information. The second sub indication information indicates a quantity of receive antennas of a first-type terminal that is barred from accessing the network device.

Optionally, the third indication information includes third sub indication information. The third sub indication information indicates a duplex mode of a first-type terminal supported by the network device, and the third sub indication information further indicates a duplex mode of a second-type terminal supported by the network device.

In a possible design solution, the third indication information may be carried in an access control field of a system information block.

Optionally, the transceiver module 1202 may include a receiving module and a sending module (not shown in FIG. 12). The transceiver module 1202 is configured to implement a sending function and a receiving function of the communication apparatus 1200.

Optionally, the communication apparatus 1200 may further include a storage module (not shown in FIG. 12). The storage module stores a program or instructions. When the processing module 1201 executes the program or the instructions, the communication apparatus 1200 is caused to perform a function of the network device in the communication method shown in any design solution of FIG. 7.

It should be understood that the processing module 1201 in the communication apparatus 1200 may be implemented by using a processor or a processor-related circuit component, and may be a processor or a processing unit. The transceiver module 1202 may be implemented by using a transceiver or a transceiver-related circuit component, and may be a transceiver or a transceiver unit.

It should be noted that the communication apparatus 1200 may be a network device, may be a chip (system) or another part or component that may be disposed in the network device, or may be an apparatus including the network device. This is not limited in this application.

In addition, for technical effects of the communication apparatus 1200, refer to technical effects of the access control method shown in any design solution of FIG. 9. Details are not described herein again.

In some other embodiments, the communication apparatus provided in embodiments of this application may further include a unit or a module configured to perform the method shown in FIG. 7. In addition, for technical effects of the communication apparatus 1200, refer to technical effects of the access control method shown in any design solution of FIG. 7. Details are not described herein again.

In some other embodiments, the communication apparatus provided in embodiments of this application may further include a unit or a module configured to perform the method shown in FIG. 9. In addition, for technical effects of the communication apparatus 1200, refer to technical effects of the access control method shown in any design solution of FIG. 9. Details are not described herein again.

In some other embodiments, the communication apparatus provided in embodiments of this application may further include a unit or a module configured to perform the method shown in FIG. 10. In addition, for technical effects of the communication apparatus 1200, refer to technical effects of the access control method shown in any design solution of FIG. 10. Details are not described herein again.

In some other embodiments, the communication apparatus provided in embodiments of this application may further include a unit or a module configured to perform the method shown in FIG. 11. In addition, for technical effects of the communication apparatus 1200, refer to technical effects of the access control method shown in any design solution of FIG. 11. Details are not described herein again.

For example, FIG. 13 is a diagram 2 of a structure of a communication apparatus according to an embodiment of this application. The communication apparatus may be a terminal device or a network device, or a chip (a system) or another part or component that may be disposed in the terminal device or the network device. As shown in FIG. 13, the communication apparatus 1300 may include a processor 1301. Optionally, the communication apparatus 1300 may further include a memory 1302 and/or a transceiver 1303. The processor 1301 is coupled to the memory 1302 and the transceiver 1303, for example, may be connected to the memory 1302 and the transceiver 1303 through a communication bus.

The following specifically describes each component of the communication apparatus 1300 with reference to FIG. 13.

The processor 1301 is a control center of the communication apparatus 1300, and may be one processor, or may be a collective term of multiple processing elements. For example, the processor 1301 is one or more central processing units (central processing unit, CPU), or may be an application specific integrated circuit (application specific integrated circuit, ASIC), or may be one or more integrated circuits configured to implement embodiments of this application, for example, one or more digital signal processors (digital signal processor, DSP) or one or more field programmable gate arrays (field programmable gate array, FPGA).

Optionally, the processor 1301 may perform various functions of the communication apparatus 1300 by running or executing a software program stored in the memory 1302 and invoking data stored in the memory 1302.

During specific implementation, in an embodiment, the processor 1301 may include one or more CPUs, such as a CPU0 and a CPU1 shown in FIG. 13.

During specific implementation, in an embodiment, the communication apparatus 1300 may alternatively include multiple processors, for example, the processor 1301 and the processor 1304 shown in FIG. 13. Each of the processors may be a single-core processor (single-CPU), or may be a multi-core processor (multi-CPU). The processor herein may be one or more devices, circuits, and/or processing cores configured to process data (for example, computer program instructions).

The memory 1302 is configured to store the software program for executing the solutions in this application, and the processor 1301 controls execution. For a specific implementation, refer to the foregoing method embodiments. Details are not described herein again.

Optionally, the memory 1302 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer, but is not limited thereto. The memory 1302 may be integrated with the processor 1301, or may exist independently, and is coupled to the processor 1301 through an interface circuit (not shown in FIG. 13) of the communication apparatus 1300. This is not specifically limited in this embodiment of this application.

The transceiver 1303 is configured to communicate with another communication apparatus. For example, the communication apparatus 1300 is a terminal device, and the transceiver 1303 may be configured to communicate with a network device or communicate with another terminal device. For another example, the communication apparatus 1300 is a network device, and the transceiver 1303 may be configured to communicate with a terminal device or communicate with another network device.

Optionally, the transceiver 1303 may include a receiver and a transmitter (not separately shown in FIG. 13). The receiver is configured to implement a receiving function, and the transmitter is configured to implement a sending function.

Optionally, the transceiver 1303 may be integrated with the processor 1301, or may exist independently, and is coupled to the processor 1301 through an interface circuit (not shown in FIG. 13) of the communication apparatus 1300. This is not specifically limited in this embodiment of this application.

It should be noted that the structure of the communication apparatus 1300 shown in FIG. 13 does not constitute a limitation on the communication apparatus. An actual communication apparatus may include more or fewer components than those shown in the figure, combine some components, or have different component arrangements.

In addition, for technical effects of the communication apparatus 1300, refer to technical effects of the random access resource selection method or the access control method shown in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, random access memories (random access memory, RAM) in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, at least one means one or more, and multiple means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A random access resource selection method, wherein the method comprises:
determining, by a terminal device, a first random access resource, wherein the terminal device is an enhanced reduced capability first-type terminal, the first random access resource comprises a random access resource of a second-type terminal or a random access resource of a third-type terminal, the second-type terminal is a reduced capability terminal, the third-type terminal is a non-reduced capability terminal, the random access resource of the second-type terminal is used by the second-type terminal for random access to a network device, and the random access resource of the third-type terminal is used by the third-type terminal for random access to the network device; and
sending, by the terminal device, a message 1 to the network device on the first random access resource, wherein the message 1 is used by the terminal device for random access to the network device.

2. The method according to claim 1, wherein determining, by the terminal device, the first random access resource comprises:
when no random access resource of the first-type terminal is configured for the terminal device, determining, by the terminal device, the first random access resource, wherein the random access resource of the first-type terminal is used by the first-type terminal to access the network device.

3. The method according to claim 2, wherein determining, by the terminal device, the first random access resource comprises:
when the random access resource of the second-type terminal is configured for the terminal device, determining, by the terminal device, the random access resource of the second-type terminal as the first random access resource.

4. The method according to claim 1, wherein the random access resource is a random access resource for transmitting the message 1, and determining, by the terminal device, the first random access resource comprises:
when no random access resource used by the first-type terminal to transmit the message 1 is configured, determining, by the terminal device, a random access resource used by the second-type terminal to transmit the message 1 as the first random access resource.

5. The method according to any one of claims 1 to 4, wherein the method further comprises:
receiving, by the terminal device, a system message 1 from the network device, wherein the system message 1 indicates the first random access resource.

6. The method according to claim 1, wherein the random access resource of the third-type terminal is configured for the terminal device; and
determining, by the terminal device, the first random access resource comprises:
when no random access resource of the first-type terminal and no random access resource of the second-type terminal are configured for the terminal device, determining, by the terminal device, the random access resource of the third-type terminal as the first random access resource.

7. The method according to any one of claims 1 to 6, wherein the method further comprises:
receiving, by the terminal device, a message 2 from the network device, wherein the message 2 indicates a timing advance for sending information by the terminal device to the network device, a delay of sending a message 3 by the terminal device, and a bandwidth occupied by the terminal device for sending the message 3, the delay of sending the message 3 by the terminal device is greater than a delay of sending the message 3 by the second-type terminal and a delay of sending the message 3 by the third-type terminal, and the bandwidth occupied by the terminal device for sending the message 3 is less than a bandwidth occupied by the second-type terminal for sending the message 3 and a bandwidth occupied by the second-type terminal for sending the message 3.

8. The method according to claim 7, wherein the method further comprises:
sending, by the terminal device, the message 3 based on the message 2, wherein the message 3 further indicates that the terminal device is the first-type terminal.

9. The method according to any one of claims 1 to 8, wherein the method further comprises:
receiving, by the terminal device, second indication information from the network device, wherein the second indication information indicates that the first-type terminal is allowed to access the network device.

10. The method according to any one of claims 1 to 9, wherein before determining, by the terminal device, the first random access resource, the method further comprises:
receiving, by the terminal device, third indication information from the network device, wherein the third indication information indicates one or more of the following: a quantity of receive antennas of a first-type terminal that is barred from accessing the network device, or a duplex mode supported by the network device; and
determining, by the terminal device based on the third indication information and capability information of the terminal device, to camp on a cell corresponding to the network device.

11. The method according to claim 10, wherein determining, by the terminal device based on the third indication information and the capability information of the terminal device, to camp on the cell corresponding to the network device comprises:
when the capability information of the terminal device comprises a quantity of receive antennas of the terminal device, if the quantity of receive antennas of the terminal device does not match the quantity of receive antennas indicated by the third indication information, camping on, by the terminal device, the cell corresponding to the network device; and/or
when the capability information of the terminal device comprises a duplex mode of the terminal device, if the duplex mode of the terminal device is a duplex mode supported by the network device, camping on, by the terminal device, the cell corresponding to the network device.

12. The method according to claim 10 or 11, wherein the quantity of receive antennas indicated by the third indication information comprises one receive antenna and/or two receive antennas, and the duplex mode indicated by the third indication information comprises half-duplex frequency division duplex.

13. The method according to any one of claims 10 to 12, wherein the third indication information comprises first sub indication information, the first sub indication information indicates a quantity of receive antennas of a first-type terminal that is barred from accessing the network device, and the first sub indication information further indicates a quantity of receive antennas of a second-type terminal that is barred from accessing the network device; or
the third indication information comprises second sub indication information, and the second sub indication information indicates a quantity of receive antennas of a first-type terminal that is barred from accessing the network device.

14. The method according to any one of claims 10 to 13, wherein the third indication information comprises third sub indication information, the third sub indication information indicates a duplex mode of a first-type terminal supported by the network device, and the third sub indication information further indicates a duplex mode of a second-type terminal supported by the network device.

15. A random access resource selection method, wherein the method comprises:
receiving, by a network device, a message 1 from a terminal device on a first random access resource, wherein the first random access resource comprises a random access resource of a second-type terminal or a random access resource of a third-type terminal, the terminal device is a reduced capability first-type terminal, the second-type terminal is a reduced capability terminal, the third-type terminal is a non-reduced capability terminal, the random access resource of the second-type terminal is used by the second-type terminal for random access to the network device, the random access resource of the third-type terminal is used by the third-type terminal for random access to the network device, and the message 1 is used by the terminal device for random access to the network device; and
sending, by the network device, a message 2 to the terminal device based on the message 1, wherein the message 2 indicates a timing advance for sending information by the terminal device to the network device, and the timing advance is determined based on the message 1.

16. The method according to claim 15, wherein receiving, by the network device, the message 1 from the terminal device on the first random access resource comprises:
when no random access resource of the first-type terminal is configured, receiving, by the network device, the message 1 from the terminal device on the first random access resource, wherein the random access resource of the first-type terminal is used by the first-type terminal to access the network device.

17. The method according to claim 16, wherein receiving, by the network device, the message 1 from the terminal device on the first random access resource comprises:
when the random access resource of the second-type terminal is configured for the terminal device, receiving, by the network device, the message 1 from the terminal device on the random access resource of the second-type terminal.

18. The method according to any one of claims 16 to 17, wherein the method further comprises:
sending, by the network device, a system message 1 to the terminal device, wherein the system message 1 indicates the first random access resource.

19. The method according to claim 15, wherein the network device configures the random access resource of the third-type terminal for the terminal device, and receiving, by the network device, the message 1 from the terminal device on the first random access resource comprises:
when no random access resource of the first-type terminal and no random access resource of the second-type terminal are configured, receiving, by the network device, the message 1 from the terminal device on the random access resource of the third-type terminal.

20. The method according to any one of claims 15 to 19, wherein the message 2 further indicates a timing advance for sending information by the terminal device to the network device, a delay of sending a message 3 by the terminal device, and a bandwidth of a resource occupied by the message 3, the delay of sending the message 3 by the terminal device is greater than a delay of sending the message 3 by the second-type terminal and a delay of sending the message 3 by the third-type terminal, and the bandwidth occupied by the terminal device for sending the message 3 is less than a bandwidth occupied by the second-type terminal for sending the message 3 and a bandwidth occupied by the second-type terminal for sending the message 3.

21. The method according to claim 20, wherein the method further comprises:
receiving, by the network device, the message 3 from the terminal device, wherein the message 3 further indicates that the terminal device is the first-type terminal.

22. The method according to any one of claims 15 to 21, wherein the method further comprises:
sending, by the network device, second indication information to the terminal device, wherein the second indication information indicates that the first-type terminal is allowed to access the network device.

23. The method according to any one of claims 15 to 22, wherein before receiving, by the network device, the message 1 from the terminal device on the first random access resource, the method further comprises:
generating, by the network device, third indication information, wherein the third indication information indicates one or more of the following: a quantity of receive antennas of a first-type terminal that is barred from accessing the network device, or a duplex mode supported by the network device; and
sending, by the network device, the third indication information to the terminal device.

24. The method according to claim 23, wherein the quantity of receive antennas indicated by the third indication information comprises one receive antenna and/or two receive antennas, and the duplex mode indicated by the third indication information comprises half-duplex frequency division duplex.

25. The method according to claim 23 or 24, wherein the third indication information comprises first sub indication information, the first sub indication information indicates a quantity of receive antennas of a first-type terminal that is barred from accessing the network device, and the first sub indication information further indicates a quantity of transmit/receive antennas of a second-type terminal that is barred from accessing the network device; or
the third indication information comprises second sub indication information, and the second sub indication information indicates a quantity of receive antennas of a first-type terminal that is barred from accessing the network device.

26. The method according to any one of claims 23 and 24, wherein the third indication information comprises third sub indication information, the third sub indication information indicates a duplex mode of a first-type terminal supported by the network device, and the third sub indication information further indicates a duplex mode of a second-type terminal supported by the network device.

27. A communication method, wherein the communication method comprises:
determining, by a terminal device, a second random access resource, wherein the terminal device is an enhanced reduced capability first-type terminal, the second random access resource comprises a first-type random access resource applicable to a second-type terminal and applicable to a first feature set, the second-type terminal is a reduced capability terminal, and the first feature set comprises one or more of the following features: small data transmission SDT, network slicing, or message 3 retransmission; and
sending, by the terminal device, a message 1 to the network device on the second random access resource, wherein the message 1 is used by the terminal device for random access to the network device.

28. The method according to claim 25, wherein determining, by the terminal device, the second random access resource comprises:
when no second-type random access resource applicable to the first-type terminal and applicable to the first feature set is configured for the terminal device, determining, by the terminal device, the second random access resource from the first-type random access resource.

29. The method according to claim 27 or 28, wherein the method further comprises:
receiving, by the terminal device, first information from the network device, wherein the first information indicates that the first-type random access resource is applicable to the first-type terminal and an SDT procedure triggered by the first-type terminal.

30. The method according to claim 29, wherein the first information is carried in a feature combination field.

31. The method according to any one of claims 27 to 30, wherein the first-type terminal comprises a first-type terminal supporting a first-type capability or a first-type terminal supporting a second-type capability; a maximum transmission rate of the first-type terminal supporting the first-type capability is less than a transmission rate of the second-type terminal, the maximum transmission rate of the first-type terminal supporting the first-type capability is determined based on a first parameter, and a baseband bandwidth of a data transmission channel of the first-type terminal supporting the first-type capability is less than a baseband bandwidth of a data transmission channel of the second-type terminal; and a maximum transmission rate of the first-type terminal supporting the second-type capability is less than the transmission rate of the second-type terminal, and the maximum transmission rate of the first-type terminal supporting the first-type capability is determined based on a second parameter, wherein
the first parameter comprises one or more of the following: a quantity of transport layers, a scaling factor, a modulation order, and a first threshold; and the second parameter comprises one or more of the following: a quantity of transport layers, a scaling factor, a modulation order, and a second threshold.

32. The method according to claim 31, wherein the method further comprises:
receiving, by the terminal device, second information from the network device, wherein
the second information indicates that the first-type random access resource is applicable to the first-type terminal supporting the first-type capability and an SDT procedure triggered by the first-type terminal supporting the first-type capability.

33. A communication method, wherein the method comprises:
receiving, by a network device, a message 1 from a terminal device on a second random access resource, wherein the terminal device is an enhanced reduced capability first-type terminal, the second random access resource comprises a first-type random access resource applicable to a second-type terminal and applicable to a first feature set, the second-type terminal is a reduced capability terminal, the first feature set comprises small data transmission, network slicing, or message 3 retransmission, and the message 1 is used by the terminal device for random access to the network device.

34. The method according to claim 33, wherein receiving, by the network device, the message 1 from the terminal device on the second random access resource comprises:
when no second-type random access resource used for the first-type terminal and applicable to the first feature set is configured for the terminal device, receiving, by the network device, the message 1 from the terminal device on the first-type random access resource.

35. The method according to claim 33 or 34, wherein the method further comprises:
sending, by the network device, first information to the terminal device, wherein the first information indicates that the first-type random access resource is applicable to the first-type terminal and an SDT procedure triggered by the first-type terminal.

36. The method according to claim 35, wherein the first information is carried in a feature combination field.

37. The method according to any one of claims 33 to 36, wherein the first-type terminal comprises a first-type terminal supporting a first-type capability or a first-type terminal supporting a second-type capability; a maximum transmission rate of the first-type terminal supporting the first-type capability is less than a transmission rate of the second-type terminal, the maximum transmission rate of the first-type terminal supporting the first-type capability is determined based on a first parameter, and a baseband bandwidth of a data transmission channel of the first-type terminal supporting the first-type capability is less than a baseband bandwidth of a data transmission channel of the second-type terminal; and a maximum transmission rate of the first-type terminal supporting the second-type capability is less than the transmission rate of the second-type terminal, and the maximum transmission rate of the first-type terminal supporting the first-type capability is determined based on a second parameter, wherein
the first parameter comprises one or more of the following: a quantity of transport layers, a scaling factor, a modulation order, and a first threshold; and the second parameter comprises one or more of the following: a quantity of transport layers, a scaling factor, a modulation order, and a second threshold.

38. The method according to claim 37, wherein the method further comprises:
sending, by the network device, second information to the terminal device, wherein
the second information indicates that the first-type random access resource is applicable to the first-type terminal supporting the first-type capability and an SDT procedure triggered by the first-type terminal supporting the first-type capability.

39. A communication method, wherein the communication method comprises:
determining, by a terminal device, a third random access resource, wherein the terminal device is an enhanced reduced capability first-type terminal, and when a random access resource set configured by a network device comprises a random access resource applicable to the first-type terminal, the third random access resource is a random access resource applicable to the first-type terminal in the random access resource set; and
sending, by the terminal device, a message 1 to the network device on the third random access resource.

40. The method according to claim 39, wherein when the random access resource set further comprises a random access resource applicable to at least one feature in a first feature set, the third random access resource is a random access resource, in the random access resource set, that is applicable to the first-type terminal and a feature used to trigger the terminal device to perform random access, a feature used to trigger the terminal device to perform random access is a feature in the first feature set, and the first feature set comprises one or more of the following features: small data transmission SDT, network slicing, or message 3 retransmission.

41. The method according to claim 40, wherein when the random access resource set comprises a random access resource applicable to a second-type terminal and does not comprise a random access resource applicable to the first-type terminal, the third random access resource is a random access resource applicable to the second-type terminal in the random access resource set.

42. The method according to claim 39, wherein when the random access resource set further comprises a random access resource applicable to at least one feature in a first feature set, the third random access resource is a random access resource, in the random access resource set, that is applicable to the first-type terminal by the network device and a feature used to trigger the terminal device to perform random access, a feature used to trigger the terminal device to perform random access is a feature in the first feature set, and the first feature set comprises one or more of the following features: small data transmission SDT, network slicing, or message 3 retransmission.

43. The method according to any one of claims 40 to 42, wherein the terminal device selects the third random access resource from the random access resource set based on the feature used to trigger the terminal device to perform random access.

44. A communication method, wherein the method comprises:
receiving, by a network device, a message 1 from a terminal device on a third random access resource, wherein the terminal device is an enhanced reduced capability first-type terminal, and the third random access resource is a random access resource applicable to the first-type terminal in a random access resource set configured by the network device.

45. The method according to claim 44, wherein when the random access resource set further comprises a random access resource applicable to at least one feature in a first feature set, the third random access resource is a random access resource, in the random access resource set, that is applicable to the first-type terminal and a feature used to trigger the terminal device to perform random access, a feature used to trigger the terminal device to perform random access is a feature in the first feature set, and the first feature set comprises one or more of the following features: small data transmission SDT, network slicing, or message 3 retransmission.

46. The method according to claim 44, wherein when the random access resource set comprises a random access resource applicable to a second-type terminal and does not comprise a random access resource applicable to the first-type terminal, the third random access resource is a random access resource applicable to the second-type terminal in the random access resource set.

47. The method according to claim 46, wherein when the random access resource set further comprises a random access resource applicable to at least one feature in a first feature set, the third random access resource is a random access resource, in the random access resource set, that is applicable to the first-type terminal by the network device and a feature used to trigger the terminal device to perform random access, a feature used to trigger the terminal device to perform random access is a feature in the first feature set, and the first feature set comprises one or more of the following features: small data transmission SDT, network slicing, or message 3 retransmission.

48. A communication method, wherein the method comprises:
determining, by a terminal device, a fourth random access resource, wherein the fourth random access resource is a random access resource that is in a random access resource set configured by a network device and that is applicable to a second feature set, and the second feature set is a set of features used to trigger the terminal device to perform random access;
or
the fourth random access resource is a random access resource applicable to a part of features of the second feature set and applicable to a first feature; and/or the fourth random access resource is a random access resource applicable to a second feature in the random access resource set, wherein
the first feature is a feature with a highest priority among all first-type features applicable to all random access resources whose applicable feature is a part of features of the second feature set; and the second feature is a feature of an enhanced reduced capability first-type terminal applicable to a random access resource in the random access resource set, a feature of a reduced capability second-type terminal, or a feature with a higher priority between a feature of an enhanced reduced capability first-type terminal and a feature of a reduced capability second-type terminal; and
sending, by the terminal device, a message 1 to the network device on the fourth random access resource.

49. The method according to claim 48, wherein the terminal device is a first-type terminal.

50. A communication method, wherein the method comprises:
receiving, by a network device, a message 1 from a terminal device on a fourth random access resource, wherein the fourth random access resource is a random access resource that is in a random access resource set configured by the network device and that is applicable to a second feature set, and the second feature set is a set of features used to trigger the terminal device to perform random access;
or
the fourth random access resource is a random access resource applicable to a part of features of the second feature set and applicable to a first feature; and/or the fourth random access resource is a random access resource applicable to a second feature in the random access resource set, wherein
the first feature is a feature with a highest priority among all first-type features applicable to all random access resources whose applicable feature is a part of features of the second feature set; and the second feature is a feature of an enhanced reduced capability first-type terminal applicable to a random access resource in the random access resource set, a feature of a reduced capability second-type terminal, or a feature with a higher priority between a feature of an enhanced reduced capability first-type terminal and a feature of a reduced capability second-type terminal.

51. The method according to claim 50, wherein the terminal device is a first-type terminal.

52. A communication apparatus, wherein the communication apparatus is configured to perform the random access resource selection method according to any one of claims 1 to 26, or the communication apparatus is configured to perform the communication method according to any one of claims 27 to 38, or the communication apparatus is configured to perform the communication method according to any one of claims 39 to 51.

53. A communication apparatus, comprising a processor and a memory, wherein the memory is configured to store computer instructions, and when the processor executes the instructions, the communication apparatus is caused to perform the random access resource selection method according to any one of claims 1 to 26, or when the processor executes the instructions, the communication apparatus is caused to perform the communication method according to any one of claims 27 to 38, or the communication apparatus is configured to perform the communication method according to any one of claims 39 to 51.

54. A communication apparatus, comprising a processor and an interface circuit, wherein
the interface circuit is configured to receive a code instruction and transmit the code instruction to the processor; and
the processor is configured to run the code instruction to perform the random access resource selection method according to any one of claims 1 to 26, or perform the communication method according to any one of claims 27 to 38, or the communication apparatus is configured to perform the communication method according to any one of claims 39 to 51.

55. A communication apparatus, wherein the communication apparatus comprises a processor and a transceiver, the transceiver is configured to exchange information between the communication apparatus and another communication apparatus, and the processor executes a program instruction, to perform the random access resource selection method according to any one of claims 1 to 26, or perform the communication method according to any one of claims 27 to 38, or the communication apparatus is configured to perform the communication method according to any one of claims 39 to 51.

56. A computer-readable storage medium, wherein the computer-readable storage medium comprises a computer program or instructions, and when the computer program or the instructions are run on a computer, the computer is caused to perform the random access resource selection method according to any one of claims 1 to 26, or the computer is caused to perform the communication method according to any one of claims 27 to 38, or the communication apparatus is configured to perform the communication method according to any one of claims 39 to 51.
